(19) Europäisches Patentamt
European Patent Office
Office européen des brevets

(11) EP 2 303 973 B1

(12) # FASCICULE DE BREVET EUROPEEN

(45) Date de publication et mention de la délivrance du brevet:
**07.10.2015 Bulletin 2015/41**

(21) Numéro de dépôt: **09772735.8**

(22) Date de dépôt: **01.07.2009**

(51) Int Cl.:
***C09D 5/16*** (2006.01) ***B08B 17/02*** (2006.01)
***C09D 183/04*** (2006.01) ***C03C 17/30*** (2006.01)
***G02B 27/00*** (2006.01) ***C03C 17/00*** (2006.01)
***G02B 1/10*** (2015.01)

(86) Numéro de dépôt international:
**PCT/FR2009/051278**

(87) Numéro de publication internationale:
**WO 2010/001053 (07.01.2010 Gazette 2010/01)**

(54) **UTILISATION D'UN REVETEMENT POREUX NON PHOTOCATALYTIQUE EN TANT QUE REVETEMENT ANTISALISSURE**

VERWENDUNG EINER NICHTPHOTOKATALYTISCHEN PORÖSEN BESCHICHTUNG ALS SCHMUTZABWEISENDE BESCHICHTUNG

USE OF A NON-PHOTOCATALYTIC POROUS COATING AS ANTISOILING COATING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.07.2008 FR 0854453**

(43) Date de publication de la demande:
**06.04.2011 Bulletin 2011/14**

(73) Titulaires:
- **Essilor International (Compagnie Générale d'Optique) 94220 Charenton-le-Pont (FR)**
- **Centre National de la Recherche Scientifique 75794 Paris Cedex 16 (FR)**

(72) Inventeurs:
- **BOILOT, Jean-Pierre F-92190 MEUDON (FR)**
- **CADET, Mamonjy F-94220 Charenton Le Pont (FR)**
- **GACOIN, Thierry F-91440 Bures Sur Yvette (FR)**
- **MATHERON, Muriel F-73000 Chambery (FR)**
- **RABOIN, Lorraine San Francisco California 94117 (US)**
- **VAGHARCHAKIAN, Laurianne F-75020 PARIS (FR)**

(74) Mandataire: **Catherine, Alain et al Cabinet HARLE et PHELIP 14-16, rue Ballu 75009 Paris (FR)**

(56) Documents cités:
**DE-A1-102005 020 168**
**FR-A- 2 787 350**
**FR-A- 2 838 734**
**FR-A- 2 896 886**
**US-A1- 2006 105 101**

- **JUNGHO RYU, WONYONG CHOI: "Substrate-Specific Photocatalytic Activities of TiO2 and Multiactivity Test for Water Treatment Application" ENVIRON. SCI. TECHNOL., [Online] vol. 42, no. 1, 30 novembre 2007 (2007-11-30), pages 294-300, XP002509812 Extrait de l'Internet: URL:http://pubs.acs.org/doi/abs/10.1021/es 071470x> [extrait le 2009-01-12]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 303 973 B1

## Description

La présente invention concerne de manière générale l'utilisation de revêtements (ou films) poreux sol-gel à matrice polysiloxane, préférentiellement à matrice de silice, n'ayant pas de propriétés photocatalytiques en tant que revêtements antisalissure. Ils sont principalement destinés à équiper des substrats en verre organique ou minéral, notamment dans le domaine de l'optique ophtalmique.

De plus en plus, on cherche à fonctionnaliser les articles en verre organique ou minéral en déposant à leur surface des revêtements de quelques nanomètres ou micromètres d'épaisseur destinés à leur conférer une propriété particulière selon l'application visée. Ainsi, il existe des couches à fonction antireflet, anti-abrasion, anti-rayure, antichoc, antibuée ou antistatique.

La présence d'eau et/ou de salissures entraîne un aspect inesthétique, une altération de la vision à travers ces articles et une diminution de la transparence des articles, ce qui est particulièrement gênant lorsqu'il s'agit de verres utilisés dans le transport automobile ou en optique ophtalmique.

Pour remédier à ces difficultés, il est connu de revêtir ces articles d'un revêtement externe antisalissure qui diminue l'énergie de surface afin d'éviter que les composés polaires ou non polaires adhèrent sur les articles et forment un film gênant.

Dans le domaine de l'optique ophtalmique, les lentilles de dernière génération comportent le plus souvent un revêtement antisalissure hydrophobe et/ou oléophobe, à base de matériaux fluorés tels que des organosilanes ou organosilazanes fluorés. Ce sont des revêtements dont l'angle de contact statique avec de l'eau déionisée est supérieur ou égal à 90°, voire même supérieur ou égal à 100° pour les meilleurs d'entre eux. De tels revêtements sont décrits par exemple dans les brevets et demandes US 6,277,485, US 6,183,872, EP 452723, EP 492545, EP 1300433 et JP 2005-187936.

La demande internationale WO 2003/087002 décrit un substrat muni d'un revêtement mésoporeux antisalissure (auto-nettoyant), comprenant une matrice à base de silice renfermant des nanoparticules ou des cristallites élémentaires d'oxyde de titane au moins partiellement cristallisé. Ces revêtements, également décrits dans les demandes WO 97/10185, WO 97/10186, WO 99/44954 et WO 01/66271, possèdent des propriétés photocatalytiques, qui sont à l'origine de leurs propriétés auto-nettoyantes. Ils sont aptes, sous l'effet de rayonnements de longueur d'onde adéquate (généralement des ultraviolets, éventuellement le domaine visible), à initier des réactions radicalaires provoquant l'oxydation de salissures organiques.

Cependant, l'activité de ces revêtements est liée à leur exposition pendant une durée suffisante à un rayonnement suffisamment intense de longueur d'onde appropriée, associée à l'eau, qui effectue l'évacuation des résidus de dégradation. La dégradation des salissures organiques, qui présente généralement une cinétique lente, est donc réalisée de façon plus efficace lorsque les conditions climatiques environnantes sont favorables.

La demande FR 2787350 décrit un substrat comportant un film mésoporeux dont la surface a été fonctionnalisée par greffage de molécules, notamment hydrophobes et/ou oléophobes, afin de lui conférer des propriétés antisalissure. Ce revêtement est préparé en deux étapes. Après l'étape de formation du film mésoporeux, qui est typiquement un film à matrice polysiloxane, le greffage des molécules hydrophobes et/ou oléophobes est réalisé par voie liquide ou gazeuse, à partir de silanes fluorés ou de silanes porteurs de groupes alkyle hydrophobes.

Il existe donc un besoin en verres moins salissants non dépendants des conditions climatiques, qui permettraient notamment de diminuer la fréquence des opérations de nettoyage, d'améliorer la visibilité et/ou d'améliorer la facilité avec laquelle ils peuvent être nettoyés. Ces verres parviendraient à absorber et/ou à éliminer les salissures se déposant progressivement à leur surface.

Jusqu'à présent, l'effet de la porosité de matériaux poreux, en particulier mésoporeux, sur leurs propriétés antisalissure, indépendamment de l'influence d'oxydes métalliques photocatalytiques, n'a jamais été évalué.

La demande internationale WO 2006/021698 décrit des couches mésoporeuses ayant une matrice à base de silice et une porosité de l'ordre de 55 %. Ces couches de bas indice de réfraction sont utilisées en tant que couches externes d'un revêtement antireflet. Dans un mode de réalisation, la couche mésoporeuse est recouverte d'un revêtement antisalissure additionnel de faible épaisseur (en général < 10 nm), de nature fluorosilicone ou fluorosilazane.

Or, la demanderesse a découvert que certains revêtements poreux à matrice polysiloxane, et plus particulièrement à base de silice ayant des pores non remplis de molécules ou particules organiques ou inorganiques photocatalytiques présentent des propriétés antisalissure, notamment anti-sébum, si bien qu'ils peuvent être employés en tant que couches externes d'empilements optiques sans qu'il soit nécessaire de les recouvrir d'un revêtement antisalissure additionnel.

Des revêtements antisalissure très performants ont donc été mis au point, grâce notamment à l'optimisation de la porosité et, dans une moindre mesure, à l'exploitation de la réactivité des fonctions silanol de la matrice, celles-ci étant capables de catalyser l'hydrolyse de certains composés organiques.

La présente invention concerne l'utilisation en tant que revêtement antisalissure d'un revêtement poreux ne présentant pas de propriétés photocatalytiques, possédant une matrice polysiloxane, préférentiellement à base de silice,

n'ayant pas été post-traitée par un composé réactif hydrophobe porteur d'au moins un groupe hydrophobe, présentant un taux de porosité allant de 25 à 70 % en volume et dont le volume est tel que le taux de remplissage potentiel dudit volume du revêtement poreux par l'acide oléique est d'au moins 25 % en volume.

L'invention sera décrite plus en détail en référence aux dessins annexés, dans lesquels :

- les figures 1, 2 ,10 et 12 représentent l'évolution du taux de diffusion en transmission en fonction du nombre de sollicitations d'essuyage de lentilles équipées d'un revêtement conforme à l'invention et de lentilles comparatives, ayant été souillées par un dépôt de salissure, et permettent de juger de leur nettoyabilité accrue.
- les figures 3 et 4 représentent l'évolution du taux de diffusion en transmission en fonction du nombre de sollicitations d'essuyage de lentilles équipées d'un revêtement conforme à l'invention et de lentilles comparatives ayant été souillées par plusieurs dépôts successifs de salissures, et permettent de juger de leur nettoyabilité accrue.
- la figure 5 représente l'évolution de la réflexion en fonction de la longueur d'onde à la surface de lentilles équipées d'un revêtement conforme à l'invention ayant été ou non souillées par un dépôt de salissure, et éventuellement soumises à un essuyage ou un traitement de régénération.
- les figures 6, 7, 11 et 13 représentent l'évolution du taux de diffusion en transmission en fonction du temps pour des lentilles équipées d'un revêtement conforme à l'invention et des lentilles comparatives, permettant de juger de leurs propriétés auto-nettoyantes.
- la figure 8 présente plusieurs clichés pris au microscope de l'état de surface de lentilles équipées d'un revêtement conforme à l'invention et de lentilles comparatives, ayant été souillées par un dépôt de salissure, qui mettent en évidence, dans le cas des revêtements conformes à l'invention, l'existence d'un front de diffusion de la partie liquide de la salissure.
- la figure 9 représente la longueur de ce front liquide en fontion du temps, et met en évidence sa progression.

Dans la présente demande, les matériaux (revêtements ou films) mésoporeux sont définis comme des solides comportant dans leur structure des pores ayant une taille allant de 2 à 50 nm, appelés mésopores, c'est-à-dire qu'au moins une partie de leur structure comprend des mésopores. Ceux-ci ont préférentiellement une taille allant de 3 à 30 nm. Cette taille de pore est intermédiaire entre celle des macropores (taille > 50 nm) et celle des micropores (taille < 2 nm, matériaux de type zéolite).

Un matériau microporeux est défini d'une façon analogue comme un solide comportant dans sa structure des pores ayant une taille < 2 nm, c'est-à-dire qu'au moins une partie de sa structure comprend des micropores. Ces définitions sont conformes à celles donnée par l'IUPAC Compendium of Chemistry Terminology, 2nd Ed., A. D. McNaught and A. Wilkinson, RSC, Cambridge, UK, 1997.

Par convention, un matériau qui comporte en même temps des micropores et des mésopores sera qualifié de mésoporeux. Dans la présente demande, un matériau microporeux ne comporte donc pas de mésopores.

Dans la présente demande, un matériau poreux est défini comme un solide comportant dans sa structure des micropores et/ou des mésopores, c'est-à-dire qu'au moins une partie de sa structure comprend des micropores et/ou des mésopores.

Les mésopores et micropores peuvent être vides, c'est-à-dire remplis d'air, ou seulement partiellement vides.

Les matériaux mésoporeux et leur préparation ont été largement décrits dans la littérature, notamment dans Science 1983, 220, 365371 ou The Journal of Chemical Society, Faraday Transactions 1985, 81, 545-548. Les matériaux microporeux sont également bien connus, et peuvent être obtenus soit en n'utilisant pas d'agent porogène au cours de leur préparation, soit en en utilisant une quantité trop faible pour donner lieu à la formation de mésopores. Les paragraphes qui suivent sont essentiellement dédiés aux revêtements mésoporeux, cependant les mêmes matières premières et les mêmes techniques générales peuvent être employées pour la préparation de matériaux microporeux.

Les matériaux mésoporeux peuvent être structurés. Un matériau structuré est défini dans la présente demande comme un matériau possédant une structure organisée, caractérisée plus spécifiquement par l'existence d'au moins un pic de diffraction dans un diagramme de diffraction des rayons X ou des neutrons, lequel est associé à la répétition d'une distance caractéristique du matériau, appelée période de répétition spatiale du système structuré.

Dans la présente demande, un matériau mésostructuré se définit comme un matériau structuré ayant une période de répétition spatiale allant de 2 à 70 nm, préférentiellement de 2 à 50 nm.

Les matériaux mésoporeux structurés sont une classe particulière de matériaux mésostructurés. Ce sont des matériaux mésoporeux ayant un arrangement spatial organisé des mésopores présents dans leur structure, dont il résulte donc une période de répétition spatiale.

Le procédé classique de préparation de films mésoporeux (éventuellement structurés) et microporeux, est le procédé sol-gel. Il comprend la préparation d'un sol peu polymérisé d'un matériau inorganique tel que la silice, à partir d'un précurseur inorganique décrit plus en détail ci-après, tel qu'un tétraalcoxysilane, en particulier le tétraéthoxysilane (TEOS). Ce sol renferme également de l'eau, un solvant organique généralement polaire tel que l'éthanol, éventuellement un catalyseur d'hydrolyse et/ou de condensation, et optionnellement un agent porogène, le plus souvent en milieu acide.

La présence de l'agent porogène est obligatoire dans le cas des matériaux mésoporeux.

Un film du sol précurseur est alors déposé sur une surface principale d'un support, et le film déposé est optionnellement consolidé. L'élimination de l'agent porogène, lorsqu'il a été utilisé en quantité suffisante, forme un film mésoporeux.

Lorsque l'agent porogène est un agent amphiphile, par exemple un agent tensioactif, il agit en tant qu'agent structurant et conduit généralement à des matériaux structurés.

La taille des pores dans le matériau final dépend de la taille de l'agent porogène qui est piégé ou encapsulé à l'intérieur du réseau de silice. Lorsqu'un tensioactif (surfactant) est employé, la taille des pores dans le solide est relativement large car le réseau de silice est bâti autour des micelles, c'est-à-dire des particules colloïdales, formées par le surfactant. De manière inhérente, les micelles ont une taille plus grande que leurs constituants, si bien que l'emploi d'un surfactant en tant qu'agent porogène produit généralement un matériau mésoporeux, si le surfactant est utilisé avec une concentration suffisante.

Lorsque l'agent porogène n'est pas un agent amphiphile, il ne forme généralement pas de micelles dans les conditions de la réaction et ne conduit généralement pas à des matériaux structurés.

Une fois le réseau inorganique formé autour des mésopores contenant l'agent porogène, cet agent porogène peut être éliminé du matériau, donnant généralement accès à un matériau mésoporeux. Dans le cas où la quantité d'agent porogène employée est trop faible, un matériau microporeux est obtenu. Dans la présente demande, un matériau peut être qualifié de mésoporeux dès lors que l'agent porogène utilisé pour sa préparation a été éliminé au moins partiellement d'au moins une partie de ce matériau, c'est-à-dire qu'au moins une partie de ce matériau contient des mésopores au moins partiellement vides.

Les films mésoporeux qui ne contiennent plus d'agent porogène et dont les pores n'ont pas été remplis par d'autres composés ont des pores qualifiés de "vides", c'est-à-dire remplis d'air, et possèdent les propriétés qui en découlent, notamment un indice de réfraction et un coefficient diélectrique faibles.

La matrice constituant le revêtement poreux, de préférence mésoporeux, est une matrice polysiloxane. Elle comprend des chainons -Si-O-Si-.

Préférentiellement, la matrice polysiloxane est une matrice à base de silice. Par matrice à base de silice, on entend une matrice obtenue à partir d'une composition comprenant un précurseur comportant au moins un atome de silicium lié à 4 groupes hydrolysables (ou hydroxyle). Une telle matrice comprend des groupes tétraoxysilane.

Un sol utilisable dans l'invention pour former la matrice poreuse à base de silice comprend :

- au moins un agent précurseur inorganique de formule :

$$Si(X)_4 \qquad (I)$$

  dans laquelle les groupes X, identiques ou différents, sont des groupes hydrolysables préférentiellement choisis parmi les groupes alcoxy -O-R, en particulier alcoxy en $C_1$-$C_4$, acyloxy -O-C(O)R où R est un radical alkyle, préférentiellement en $C_1$-$C_6$, de préférence méthyle ou éthyle, et halogènes tels que Cl, Br et I et les combinaisons de ces groupes; ou un hydrolysat de cet agent précurseur;
- au moins un solvant organique;
- au moins un agent porogène;
- de l'eau et éventuellement un catalyseur d'hydrolyse des groupes X.

Le composé (I) est le précurseur d'une matrice de silice ou de silicate d'au moins un métal. De préférence, les groupes X sont des groupes alcoxy, et en particulier méthoxy ou éthoxy, et mieux éthoxy.

Les composés (I) préférés sont les orthosilicates de tétraalkyle. Parmi ceux-ci, on utilise avantageusement le tétraéthoxysilane (ou orthosilicate de tétraéthyle) $Si(OC_2H_5)_4$ noté TEOS, le tétraméthoxysilane $Si(OCH_3)_4$ noté TMOS, ou le tétraisopropoxysilane $Si(OC_3H_7)_4$ noté TPOS, et de préférence le TEOS.

Les agents précurseurs inorganiques de formule (I) présents dans le sol représentent en général de 10 à 30 % en masse par rapport à la masse totale (incluant tous les autres composés présents dans le sol précurseur, en particulier le solvant) du sol précurseur.

Le milieu dans lequel se trouve l'agent précurseur de formule (I) est en général un milieu acide, le caractère acide du milieu étant obtenu par addition, par exemple, d'un acide minéral, typiquement HCl ou un acide organique tel que l'acide acétique, de préférence HCl. Cet acide remplit le rôle de catalyseur d'hydrolyse et de condensation en catalysant l'hydrolyse des groupes X du composé de formule (I).

Selon un mode de réalisation spécifique, la matrice polysiloxane présente un caractère hydrophobe.

Une technique pour conférer un caractère hydrophobe à la matrice est d'utiliser comme sol formant la matrice polysiloxane un sol comprenant, outre le composé (I) :

- au moins un agent précurseur hydrophobe porteur d'au moins un groupe hydrophobe, préférentiellement un réactif de type silane, en particulier alkoxysilane porteur d'au moins un groupe hydrophobe directement en contact avec le silicium.
- au moins un solvant organique;
- au moins un agent porogène;

  - de l'eau et éventuellement un catalyseur d'hydrolyse des groupes hydrolysables.

Par groupes « hydrophobes », on entend, dans le cadre de la présente invention, des combinaisons d'atomes qui ne sont pas susceptibles de s'associer avec des molécules d'eau, notamment par liaison hydrogène. Ce sont généralement des groupes organiques non polaires, exempts d'atomes chargés. Les groupes alkyle, phényle, fluoroalkyle, perfluoroalkyle, (poly)fluoro alcoxy[(poly)alkylènoxy] alkyle, trialkylsilyloxy et l'atome d'hydrogène entrent donc dans cette catégorie. Les groupes alkyles sont les groupes hydrophobes préférés.

Les agents précurseurs hydrophobes sont préférentiellement ajoutés directement dans le sol précurseur, généralement sous forme de solution dans un solvant organique et sont préférentiellement choisis parmi les composés et les mélanges des composés de formules (II) ou (III) :

$$(R^1)_{n1}(R^2)_{n2}M \quad \text{ou} \quad (R^3)_{n3}(R^4)_{n4}M—R'—M(R^5)_{n5}(R^6)_{n6}$$

(II) (III)

dans lesquelles :

- M représente un métal ou métalloïde tétravalent, par exemple Si, Sn, Zr, Hf ou Ti, de préférence le silicium.
- $R^1$, $R^3$ et $R^5$, identiques ou différents, représentent des groupes hydrophobes hydrocarbonés saturés ou non, de préférence en $C_1$-$C_8$ et mieux en $C_1$-$C_4$, par exemple un groupe alkyle, tel que méthyle ou éthyle, un groupe vinyle, un groupe aryle, par exemple phényle, éventuellement substitués, notamment par un ou plusieurs groupes alkyles en $C_1$-$C_4$, ou représentent les groupes analogues fluorés ou perfluorés des groupes hydrocarbonés précités, par exemple des groupes fluoroalkyles, perfluoroalkyles, ou un groupe (poly)fluoro ou perfluoro alcoxy[(poly)alkylènoxy] alkyle. De préférence $R^1$, $R^3$ et $R^5$ représentent le groupe méthyle.
- $R^2$, $R^4$ et $R^6$, identiques ou différents, représentent des groupes hydrolysables, choisis préférentiellement parmi les groupes alcoxy -O-R, en particulier alcoxy en $C_1$-$C_4$, acyloxy -O- C(O)R où R est un radical alkyle, préférentiellement en $C_1$-$C_6$, de préférence méthyle ou éthyle, et les halogènes tels que Cl, Br et I. Ce sont de préférence des groupes alcoxy, notamment méthoxy ou éthoxy, et mieux éthoxy.
- R' représente un groupe divalent, par exemple un groupe alkylène linéaire ou ramifié, éventuellement substitué, un groupe cycloalkylène, éventuellement substitué, un groupe arylène, éventuellement substitué ou une combinaison des groupes précités de même catégorie et/ou de catégories différentes, notamment les groupes cycloalkylènealkylènes, biscycloalkylènes, biscycloalkylènealkylènes, arylènealkylènes, bisphénylènes et bisphénylènealkylènes. Parmi les groupes alkylènes préférés, on peut citer les groupes alkylènes linéaires en $C_1$-$C_{10}$, par exemple le groupe méthylène $-CH_2-$, le groupe éthylène $-CH_2-CH_2-$, butylène, hexylène, notamment 1,4-butylène et 1,6-hexylène et les radicaux alkylènes ramifiés en $C_3$-$C_{10}$ tels que les radicaux 1,4-(4-méthyl pentylène), 1,6-(2,2,4-triméthyl hexylène), 1,5-(5-méthyl hexylène), 1,6-(6-méthyl heptylène), 1,5-(2,2,5-triméthyl hexylène), 1,7-(3,7-diméthyl octylène), 2,2-(diméthylpropylène) et 1,6-(2,4,4-triméthyl hexylène). Parmi les radicaux cycloalkylènes préférés, on peut citer les radicaux cyclopentylène et cyclohexylène, éventuellement substitués notamment par des groupes alkyles. R' représente de préférence un groupe méthylène, éthylène ou phénylène.
- $n_1$ est un entier de 1 à 3, $n_2$ est un entier de 1 à 3, $n_1 + n_2 = 4$,
- $n_3$, $n_4$, $n_5$, et $n_6$ sont des entiers de 0 à 3 à la condition que les sommes $n_3 + n_5$ et $n_4 + n_6$ soient différentes de zéro, et $n_3 + n_4 = n_5 + n_6 = 3$.

Les agents précurseurs hydrophobes préférés sont les alkylalcoxysilanes, préférentiellement les alkyltrialcoxysilanes, tel que le méthyltriéthoxysilane (MTEOS, $CH_3Si(OC_2H_5)_3$), les vinylalcoxysilanes, notamment les vinyltrialcoxysilanes, tel que le vinyltriéthoxysilane, les fluoroalkyl alcoxysilanes, préférentiellement les fluoroalkyl trialcoxysilanes tel que le 3,3,3-trifluoropropyltriméthoxysilane de formule $CF_3CH_2CH_2Si(OCH_3)_3$ et les arylalcoxysilanes, préférentiellement les aryltrialcoxysilanes.. L'agent précurseur hydrophobe particulièrement préféré est le méthyltriéthoxysilane (MTEOS).

En général, le rapport molaire de l'agent précurseur hydrophobe à l'agent précurseur inorganique de formule (I) varie de 10/90 à 50/50, mieux de 20/80 à 45/55, et est de préférence égal à 40/60, notamment lorsqu'on utilise le MTEOS comme agent précurseur hydrophobe dans le sol précurseur.

Typiquement, l'agent précurseur hydrophobe porteur d'au moins un groupe hydrophobe peut représenter de 1 à 50 % en masse par rapport à la masse totale du sol précurseur, et le rapport de la masse d'agents porogènes à la somme de la masse d'agents précurseurs inorganiques et de la masse d'agents précurseurs hydrophobes porteurs d'au moins un groupe hydrophobe éventuellement ajoutés dans le sol précurseur, varie de 0,01 à 5, de préférence de 0,05 à 1.

Selon un autre mode de réalisation, les revêtements selon l'invention ont une matrice polysiloxane préparée à partir d'un sol ne contenant pas d'agent précurseur hydrophobe porteur d'au moins un groupe hydrophobe. Selon ce mode de réalisation, la matrice du revêtement poreux formée lors de l'étape initiale de polymérisation n'est donc pas une matrice ayant un caractère hydrophobe.

Comme cela sera vu dans les exemples, les revêtements poreux ayant une matrice polysiloxane préparée à partir d'un sol ne contenant pas d'agent précurseur hydrophobe ont de meilleures propriétés anti-salissures et/ou auto-nettoyantes que les revêtements obtenus lorsqu'un agent précurseur hydrophobe est utilisé.

Toutefois, l'efficacité de ces derniers revêtements reste excellente et meilleure que lorsque le revêtement poreux est soumis à un post-traitement par réaction avec un composé réactif hydrophobe, autre voie possible pour rendre la matrice polysiloxane hydrophobe, et qui sera décrite par la suite à titre d'information.

Par ailleurs, ces revêtements poreux dont la matrice a été préparée à partir d'un sol comprenant un agent précurseur hydrophobe présentent une meilleure stabilité dans le temps de leurs propriétés, en particulier de leur indice de réfraction et présentent une absorption d'eau limitée.

Les solvants organiques ou le mélange de solvants organiques convenant pour la préparation du sol précurseur selon l'invention sont tous des solvants classiquement utilisés, et plus particulièrement les solvants polaires, notamment les alcanols comme le méthanol, l'éthanol, l'isopropanol, l'isobutanol, le *n*-butanol et leurs mélanges. D'autres solvants, de préférence hydrosolubles, peuvent être employés, tels que le 1,4-dioxane, le tétrahydrofurane ou l'acétonitrile. Le solvant organique préféré est l'éthanol.

En général, le solvant organique représente de 40 à 90 % en masse par rapport à la masse totale du sol précurseur. L'eau présente dans le sol précurseur représente généralement de 10 à 20 % en masse de la masse totale du sol précurseur.

L'agent porogène du sol précurseur peut être un agent porogène amphiphile ou non amphiphile. Généralement, il s'agit d'un composé organique. Il peut être utilisé seul ou en mélange avec d'autres agents porogènes.

Comme agents porogènes non amphiphiles utilisables dans la présente invention, on peut citer :

- des polymères synthétiques tels que le polyoxyde d'éthylène, de masse molaire comprise entre 50000 et 300000, le polyéthylèneglycol, de masse molaire comprise entre 50000 et 300000,
- la gamma-cyclodextrine, l'acide lactique, et d'autres matériaux biologiques tels que des protéines ou des sucres tels que le D-glucose ou le maltose.

L'agent porogène est de préférence un amphiphile du type tensioactif. Une caractéristique essentielle d'un tel composé est qu'il est capable de former des micelles en solution suite à l'évaporation des solvants qui concentre la solution, pour conduire à la formation d'un film mésostructuré à matrice minérale.

Les composés tensioactifs peuvent être non ioniques, cationiques, anioniques ou amphotères. Ces agents tensioactifs sont pour la plupart disponibles dans le commerce.

Les composés tensioactifs utilisables dans la présente invention sont ceux décrits dans la demande WO 2007/088312. Les agents porogènes préférés sont le bromure de cétyltriméthylammonium (CTAB) et les copolymères diblocs ou triblocs, préférentiellement triblocs, d'oxyde d'éthylène et d'oxyde de propylène.

En général, l'agent porogène représente de 2 à 10 % de la masse totale du sol précurseur. Typiquement, le rapport du nombre de moles d'agents porogènes utilisés au nombre de moles d'agents précurseurs de formule (I) ajoutés dans le sol précurseur varie de 0,01 à 5, de préférence de 0,05 à 1, mieux de 0,05 à 0,25.

L'étape de dépôt du film de sol précurseur sur la surface principale du support peut se faire par tout procédé classique, par exemple dépôt au trempé, dépôt par pulvérisation ou dépôt par centrifugation, de préférence par centrifugation. Cette étape de dépôt est de préférence effectuée dans une atmosphère présentant un taux d'humidité relative (HR) variant de 40 à 80 %.

L'étape optionnelle de consolidation de la structure du film de sol précurseur déposé consiste à terminer l'élimination du solvant ou mélange de solvants organiques du film de sol précurseur et/ou de l'excès éventuel d'eau et poursuivre la condensation de certains groupes silanol résiduels présents dans le sol, généralement par chauffage dudit film. De préférence, cette étape s'effectue par chauffage à une température $\leq$ 150 °C, de préférence $\leq$ 130 °C, mieux $\leq$ 120 °C et mieux encore $\leq$ 110 °C.

L'étape d'élimination de l'agent porogène peut être partielle ou totale. De préférence, cette étape élimine au moins 90 % en masse de la masse totale d'agent porogène présent dans le film résultant de l'étape précédente, mieux au moins 95 % en masse et encore mieux au moins 99 % en masse. Cette élimination est réalisée par toute méthode

appropriée, par exemple par calcination à haute température (chauffage à une température généralement de l'ordre de 400 °C), mais elle est de préférence accomplie grâce à des méthodes permettant de travailler à basse température, c'est-à-dire à une température ≤ 150 °C, de préférence ≤ 130 °C, mieux ≤ 120 °C et mieux encore ≤ 110 °C. On peut citer notamment les méthodes connues d'extraction par solvant ou fluide à l'état supercritique, de dégradation à l'ozone, de traitement par plasma par exemple d'oxygène ou d'argon ou décharge corona ou de photo-dégradation par exposition à un rayonnement lumineux, notamment UV. Cette dernière technique est notamment décrite dans la demande US 2004/0151651. Une extraction par un fluide supercritique (typiquement le $CO_2$ supercritique) d'un tensioactif au sein d'un matériau mésostructuré est décrite dans le brevet JP 2000-226572.

De préférence, l'élimination de l'agent porogène se fait par extraction. Plusieurs extractions successives peuvent être réalisées, de façon à parvenir au niveau d'extraction souhaité.

Dans un mode de réalisation, l'extraction se fait au moyen d'un solvant organique ou mélange de solvants organiques en trempant le film formé et éventuellement consolidé dans un solvant ou un mélange de solvants de préférence organiques portés à une température ≤ 150 °C. On utilise de préférence un solvant au reflux. Tout solvant ayant un point d'ébullition ≤ 150 °C, de préférence ≤ 130 °C, mieux < 120 °C et mieux encore ≤ 110 °C peut convenir. Les solvants préférés sont les alcanols, en particulier l'éthanol (Teb = 78 °C), les alkylcétones, en particulier l'acétone (Teb = 56 °C) et les chloroalcanes tels que le dichlorométhane ou le chloroforme. On utilise de préférence un solvant non toxique tel que l'acétone ou l'éthanol.

Dans un mode de réalisation préféré, l'extraction par un solvant peut également être efficacement réalisée à température ambiante, sous agitation, avec l'aide des ultrasons.

L'extraction de l'agent porogène au moyen d'un solvant organique permet un meilleur contrôle de l'épaisseur finale du film poreux que dans le cas de la calcination et est mieux adaptée aux substrats polymères.

La préparation de revêtements mésoporeux à matrice à base de silice est décrite plus en détail dans les demandes WO 2006/021698, WO 2007/088312 et WO 2007/090983 au nom du demandeur, qui sont incorporées par référence dans la présente demande.

Les revêtements selon l'invention ont une matrice à base de silice comprenant des groupes silanol, qui n'a pas été traitée par un composé réactif hydrophobe porteur d'au moins un groupe hydrophobe.

Une autre technique conduisant à l'obtention d'une matrice ayant un caractère hydrophobe mais ne faisant pas partie de l'invention va maintenant être décrite. Selon cet autre mode de réalisation de l'invention, le film poreux dont la préparation est décrite ci-dessus est traité par au moins un composé réactif hydrophobe porteur d'au moins un groupe hydrophobe, afin de conférer ou renforcer son caractère hydrophobe. Le composé réactif hydrophobe est réactif vis-à-vis des groupes silanol et un traitement par ce composé conduit à une matrice de silice dont les groupes silanol ont été dérivatisés en groupes hydrophobes.

La définition des groupes hydrophobes est la même que celle utilisée pour les agents précurseurs hydrophobes définis précédemment.

Cette étape additionnelle de traitement, appelée "greffage post-synthétique", est réalisée après l'étape dépôt d'un film du sol précurseur sur une surface principale du support ou si elle existe, après l'étape de consolidation du film déposé. Elle permet d'augmenter le caractère hydrophobe du film, et de limiter ainsi la quantité d'eau adsorbée dans les pores du matériau.

Elle peut être réalisée au cours de l'étape d'élimination de l'agent porogène, après l'étape d'élimination de l'agent porogène, ou même avant l'étape d'élimination de l'agent porogène.

Les composés réactifs hydrophobes porteurs d'au moins un groupe hydrophobe convenant particulièrement pour la présente invention sont des composés d'un métal ou métalloïde tétravalent, préférentiellement du silicium, comportant une seule fonction capable de réagir avec les groupes hydroxyle restants dans le film, en particulier une fonction Si-Cl, Si-NH-, Si-OR où R est un groupe alkyle, de préférence en $C_1$-$C_4$.

De préférence, ledit composé réactif hydrophobe est choisi parmi les composés et les mélanges de composés de formule (IV) :

$$(R'^{1'})_3(R'^{2})M \qquad \text{(IV)}$$

dans laquelle :

- M représente un métal ou métalloïde tétravalent, par exemple Si, Sn, Zr, Hf ou Ti, de préférence le silicium.
- les groupes $R'^1$, identiques ou différents, représentent des groupes hydrophobes hydrocarbonés saturés ou non, de préférence en $C_1$-$C_8$ et mieux en $C_1$-$C_4$, par exemple un groupe alkyle, tel que méthyle ou éthyle, un groupe vinyle, un groupe aryle, par exemple phényle, éventuellement substitués, notamment par un ou plusieurs groupes alkyles en $C_1$-$C_4$, ou représentent les groupes analogues fluorés ou perfluorés des groupes hydrocarbonés précités, par exemple des groupes fluoroalkyles ou perfluoroalkyles, ou bien des groupes (poly)fluoro ou perfluoro alcoxy[(poly)alkylènoxy]alkyle. De préférence, le groupe $R'^1$ est un groupe méthyle.

- le groupe $R'^2$ représente un groupe hydrolysable, choisi préférentiellement parmi les groupes alcoxy -O-R", en particulier alcoxy en $C_1$-$C_4$, acyloxy -O-C(O)R" où R" est un radical alkyle, préférentiellement en $C_1$-$C_6$, de préférence méthyle ou éthyle, amino éventuellement substitué par un ou deux groupes fonctionnels, par exemple un groupe alkyle ou silane, et les halogènes tels que Cl, Br et I. Ce sont de préférence des groupes alcoxy, notamment méthoxy ou éthoxy, chloro ou $-NHSiMe_3$.

Comme composé réactif hydrophobe, on peut utiliser avantageusement un fluoroalkyl chlorosilane, notamment un tri(fluoroalkyl)chlorosilane ou un fluoroalkyl dialkyl chlorosilane tel que le 3,3,3-trifluoropropyldiméthyl chlorosilane de formule $CF_3$-$CH_2$-$CH_2$-$Si(CH_3)_2Cl$, un alkylalkoxysilane, notamment un trialkylalcoxysilane, tel que le triméthylméthoxysilane $(CH_3)_3SiOCH_3$, un fluoroalkyl alcoxysilane, notamment un tri(fluoroalkyl)alcoxysilane ou un fluoroalkyl dialkyl alcoxysilane, un alkylchlorosilane, notamment un trialkylchlorosilane, tel que le triméthylchlorosilane, un trialkylsilazane ou un hexaalkyldisilazane.

Dans un mode préféré de réalisation, le composé réactif hydrophobe comprend un groupe trialkylsilyle, préférentiellement un groupe triméthysilyle, et un groupe silazane, en particulier un groupe disilazane. Le composé réactif hydrophobe particulièrement préféré est le 1,1,1,3,3,3-héxaméthyldisilazane $(CH_3)_3Si$-$NH$-$Si(CH_3)_3$, noté HMDS.

Cette étape de greffage post-synthétique est décrite plus en détail dans les demandes US 2003/157311, WO 99/09383 et WO 2007/088312. Elle peut être effectuée sur un revêtement poreux dont la matrice présente déjà un caractère hydrophobe, du fait qu'elle a été obtenue à partir d'un sol comprenant un agent précurseur hydrophobe.

Une caractéristique essentielle du film poreux de l'invention, que sa matrice ait un caractère hydrophobe ou non, pour qu'il puisse être exploité pour ses propriétés antisalissure, est son taux de porosité volumique, qui doit être d'au moins 25 %, de préférence au moins 30 %, mieux au moins 40 %, encore mieux au moins 50 %, mais inférieur ou égal à 70 %. En-dessous de 25 %, la porosité devient insuffisante pour induire des effets antisalissure intéressants, notamment une nettoyabilité suffisante, alors qu'au-dessus de 70%, la structure devient de plus en plus fragile et tend à s'écrouler. Dans la présente demande, les taux de porosité sont des taux volumiques.

Le taux de porosité représente la fraction de vide dans le matériau poreux de l'invention. Celui-ci comprend les mésopores, lorsqu'ils sont présents, mais également, inévitablement, les micropores. Il peut être contrôlé en ajustant la proportion d'agent porogène au sein de la matrice à base de silice : plus la concentration en agent porogène est importante, plus la porosité (après élimination de l'agent porogène) est grande.

De préférence, le matériau poreux de l'invention ne comprend pas de macropores. La porosité du matériau poreux de l'invention représente généralement la somme de la microporosité et de la mésoporosité.

Une autre caractéristique essentielle du film poreux de l'invention, que sa matrice ait un caractère hydrophobe ou non, pour qu'il puisse être exploité pour ses propriétés antisalissure, est qu'il possède un volume tel que le taux de remplissage potentiel dudit volume du revêtement poreux par l'acide oléique (composant représentatif des salissures organiques) soit d'au moins 25 % en volume. Ceci implique que son taux de porosité volumique est nécessairement supérieur ou égal à 25 %.

De préférence, ce taux de remplissage potentiel du volume du revêtement poreux par l'acide oléique est d'au moins 30 % en volume, mieux au moins 40 %, mieux encore au moins 45 %, et idéalement au moins 50 %. Ce taux de remplissage potentiel du volume du revêtement poreux par l'acide oléique est inférieur ou égal à 70% en volume, de préférence inférieur ou égal à 65% et mieux inférieur à 60%.

Le taux de remplissage potentiel du volume du revêtement poreux par l'acide oléique est un paramètre mesurant l'accessibilité de la porosité à l'acide oléique, composant reproduisant le comportement de la salissure (typiquement le sébum, qui en contient 20-30%). En d'autres termes, le revêtement poreux de l'invention possède un taux de porosité allant de 25 à 70 % en volume, et le volume poreux accessible à un composant représentatif des salissures organiques, l'acide oléique, représente au moins 25% du volume total du revêtement poreux.

Ce taux de remplissage potentiel du revêtement, c'est-à-dire sa capacité à être rempli, peut aisément être déterminé par l'homme du métier en réalisant le test de remplissage par l'acide oléique présenté en détail dans la partie expérimentale de la présente demande. Il représente le rapport entre le volume du revêtement qui peut être rempli d'acide oléique divisé par le volume total du revêtement.

Si l'aptitude à la pénétration au sein du réseau microporeux, et éventuellement mésoporeux, de l'acide oléique est insuffisante, le revêtement ne présentera pas de propriétés antisalissure suffisantes, en particulier une nettoyabilité et une capacité d'auto-nettoyage satisfaisantes.

Les propriétés antisalissure des revêtements poreux de l'invention vont maintenant être décrites. Au contraire des revêtements antisalissure couramment utilisés pour la protection des verres, notamment des verres ophtalmiques, qui se caractérisent par une haute aptitude à la répulsion de l'eau et/ou des liquides organiques (angles de contact statique élevés), les propriétés antisalissure des revêtements de l'invention peuvent se manifester de deux façons différentes : amélioration de la nettoyabilité (aptitude au nettoyage) du substrat sur lequel le revêtement est déposé et/ou acquisition de propriétés d'auto-nettoyage par ce substrat. Les matériaux de l'invention présentent généralement simultanément ces deux types de propriétés. Ce sont les premiers revêtements décrits capables de combiner les propriétés "auto-nettoyant" et "facile à nettoyer", qui ne soient pas photocatalytiques.

Un revêtement possédant des propriétés auto-nettoyantes (self-cleaning) est avantageux dans le sens où la surface qu'il recouvre doit être lavée moins souvent que les surfaces traditionnelles : il agit en tant que retardateur d'encrassement et diminue la perception par le porteur de la salissure par rapport à un revêtement antisalissure classique, et ce, dès le dépôt de la salissure. Dans le cas d'un verre optique, le porteur n'a pas besoin d'être actif pour qu'il y ait des effets du revêtement vis-à- vis à la salissure. Le revêtement auto-nettoyant de l'invention diminue la participation du porteur de lunettes au nettoyage de ses verres et la gêne visuelle engendrée par les salissures (moins de diffusion).

Les caractéristiques d'auto-nettoyage des revêtements de l'invention peuvent être évaluées en mesurant le taux de diffusion en transmission en fonction du temps, dans le cas d'un substrat transparent. Sans vouloir être limité par une quelconque théorie, on peut penser que la baisse du taux de diffusion qui est observée résulte de l'imprégnation de la salissure dans la porosité : la porosité permettant de drainer la partie liquide de la salissure, celle-ci devient moins visible.

Un revêtement possédant des propriétés de nettoyabilité accrues rend la surface qu'il recouvre plus facile, plus rapide à nettoyer (easy to clean). Dans le cas d'un verre optique, le porteur nettoie plus facilement le revêtement à l'aide d'un chiffon d'essuyage.

Les caractéristiques de nettoyabilité accrue des revêtements de l'invention peuvent être évaluées en mesurant le taux de diffusion en transmission en fonction du nombre de sollicitations d'essuyage, dans le cas d'un substrat transparent. Elles peuvent s'expliquer par le fait que la partie liquide de la salissure est évacuée dans la structure poreuse. Lorsque la salissure comporte une partie solide, celle-ci reste généralement à la surface du revêtement et est plus facile à éliminer.

Dans la gamme de taux de porosité 25-70 %, la nettoyabilité et la capacité d'auto-nettoyage croissent avec le taux de porosité.

Les inventeurs ont par ailleurs découvert que bien que les propriétés antisalissure des revêtements utilisés conformément à la présente invention étaient essentiellement liées à leur capacité d'évacuation de leur surface des résidus organiques, grâce à leur nature poreuse et à la possibilité d'accéder à cette porosité, celles-ci étaient également liées, dans une moindre mesure, à leur capacité de décomposition d'une partie des dépôts de résidus organiques.

Les fonctions silanol de la matrice à base de silice sont en effet capables de catalyser la dégradation, en particulier l'hydrolyse, de constituants de salissures organiques tels que les cires, triglycérides ou ester de stérols, en particulier les esters. Ceci a pour effet de réduire la longueur des chaînes de ces constituants, et contribue à modifier la morphologie de la salissure en la rendant plus liquide. La salissure s'étale donc plus facilement à la surface du revêtement, ce qui en facilite le nettoyage, et est plus facilement absorbée par la structure poreuse.

Des esters d'acides gras organiques, par nature hydrolysables, sont présents par exemple dans le sébum ou la sueur. La réaction d'hydrolyse des esters d'acides gras catalysée par les groupes silanol d'un revêtement poreux conforme à l'invention peut être mise en évidence par suivi par spectroscopie infrarouge de la transformation de la fonction ester en fonction acide. Cette réaction d'hydrolyse est cependant relativement lente et n'affecte qu'une partie des constituants des salissures organiques (environ 30 % du sébum, pourcentage variable selon les individus, n'est pas hydrolysable).

Par rapport aux revêtements photocatalytiques décrits dans la demande WO 2003/087002, les revêtements antisalissure de l'invention ont des propriétés antisalissure permanentes (non liées à l'irradiation lumineuse reçue), et la cinétique du processus d'auto-nettoyage est plus rapide. Un substrat revêtu de la couche antisalissure de l'invention est actif vis-à-vis de la salissure dans des conditions environnementales très larges.

Le matériau poreux de l'invention ne comprend pas d'oxydes susceptibles d'être photocatalytiques tels que le dioxyde de titane $TiO_2$, l'oxyde de zinc ZnO, l'oxyde d'étain ou l'oxyde de tungstène, incorporés dans sa structure mésoporeuse, et, plus généralement, ne possède pas de propriétés photocatalytiques.

En cas de dépôts et essuyages successifs de salissures, il devient plus difficile de nettoyer le revêtement poreux de l'invention. Dépôt après dépôt, le nettoyage demande un temps d'essuyage plus long pour parvenir au même niveau de diffusion, puisque la structure poreuse se remplit progressivement et ne peut plus accueillir autant de salissure qu'un revêtement poreux qui n'a encore jamais été souillé. Toutefois, le revêtement antisalissure de l'invention doit subir plusieurs dépôts successifs pour devenir moins performant en termes de nettoyabilité que les revêtements antisalissure commerciaux à base de fluorosilanes ou de fluorosilazanes. Quel que soit le nombre de dépôts effectués, il reste plus facile à nettoyer qu'un revêtement anti-abrasion à base de silanes ou qu'un revêtement microporeux ne possédant pas les caractéristiques de porosité et d'accessibilité à l'acide oléique des revêtements poreux de l'invention.

Le revêtement poreux de l'invention présente aussi l'avantage de pouvoir être facilement régénéré, c'est-à-dire revenir à un niveau de propriétés antisalissure comparable à l'état initial, grâce à un simple lavage, par exemple au moyen d'un tensioactif (savon), ou mieux, avec un solvant organique tel que l'acétone ou un alcool (par exemple l'isopropanol). La régénération peut être effectuée plusieurs fois, c'est-à-dire que le revêtement poreux retrouve ses propriétés initiales même après plusieurs cycles salissure-lavage.

Ainsi, l'invention concerne également l'utilisation d'un revêtement poreux tel que précédemment décrit ayant

été régénéré, c'est-à-dire un revêtement poreux selon l'invention ayant au préalable reçu au moins un dépôt de salissure puis fait l'objet d'un lavage, notamment au moyen d'un tensioactif et/ou d'un solvant organique.

Dans le cas où la matrice à base de silice a été fonctionnalisée par un composé réactif hydrophobe porteur d'au moins un groupe hydrophobe, plusieurs changements interviennent dans la structure et les propriétés des matériaux poreux.

Dans le cas d'un post-traitement mené en totalité, le revêtement poreux ainsi préparé ne possède plus de fonctions silanol capables de contribuer à l'hydrolyse de constituants de salissure. Lors d'une fonctionnalisation par le HMDS, ces groupes sont remplacés par des groupes $Si\text{-}O\text{-}Si(CH_3)_3$. Le revêtement poreux à matrice hydrophobe est donc moins apte à provoquer une baisse du taux de diffusion par évacuation de la salissure dans la porosité, et moins enclin à faciliter son étalement et donc son nettoyage.

Ensuite, ce revêtement poreux hydrophobe possède un taux de porosité généralement plus faible que celui du même revêtement avant hydrophobation. En effet, le volume poreux diminue du fait d'une densification des parois de la structure poreuse, dont découle une réduction de la microporosité. L'accessibilité à la porosité est donc réduite, tout comme le volume accessible à la salissure.

Enfin, étant donné que la silice fonctionnalisée par un agent hydrophobe possède un caractère hydrophobe, l'affinité entre la surface du revêtement poreux et la salissure est modifiée. Le revêtement dont la surface a été soumise à un traitement d'hydrophobation est généralement moins favorable à l'étalement de la salissure.

Les revêtements poreux fonctionnalisés post-synthèse par un agent hydrophobe ont des propriétés d'auto-nettoyage généralement plus faibles qu'avant leur hydrophobation. Ils sont notamment imprégnés moins rapidement par la salissure. Ils conviennent pour une utilisation en tant que revêtements antisalissure, d'une part en raison de leur surface auto-nettoyante, même si elle est moins efficace, mais surtout pour leurs propriétés de nettoyabilité, qui restent très intéressantes.

Dans le cas où la matrice polysiloxane du revêtement poreux selon l'invention est préparée à partir d'un sol contenant un agent précurseur hydrophobe porteur d'au moins un groupe hydrophobe, (l'exemple type est une matrice de TEOS/MTEOS avec des ratios molaires de MTEOS/TEOS inférieurs à 50%), la matrice comporte des groupements hydrophobes, mais également une fraction de groupements hydroxy libres.

Les inventeurs ont constaté que, pour les matrices poreuses hydrophobes de ce type, même si l'effet autonettoyant est moins rapide que dans le cas d'une matrice non hydrophobe, on obtient d'excellents résultats d'auto-nettoyage au cours du temps, par comparaison avec le greffage en post-traitement.

Par ailleurs, contrairement à une matrice traitée par un agent hydrophobe en post-traitement, cette matrice présente un comportement hybride qui permet, comme c'est le cas avec une matrice non hydrophobe, d'atténuer l'effet de diffusion, donc la gêne visuelle, immédiatement après dépôt d'une salissure, ce qui n'est pas le cas des couches hydrophobes et oléophobes classiques communément utilisées.

Les revêtements poreux de l'invention, qu'ils soient à matrice hydrophobe ou non hydrophobe, peuvent être facilement régénérés après avoir été souillés.

Selon un premier mode de réalisation, le revêtement poreux utilisé dans la présente invention pour ses propriétés antisalissure est un revêtement mésoporeux. La présence de mésopores facilite la réalisation de la caractéristique d'accessibilité à l'acide oléique, ce qui s'explique par la présence d'un volume poreux suffisant et d'une taille de pores suffisante pour permettre l'accès aux salissures. Ce mode de réalisation est le mode de réalisation préféré de l'invention. En effet, un matériau mésoporeux présente de meilleures caractéristiques de nettoyabilité et d'auto-nettoyage qu'un matériau microporeux.

Dans ce premier mode de réalisation, le revêtement poreux comprend donc des mésopores, généralement bien calibrés, en l'occurrence de 4 nm de diamètre (empreinte des micelles), mais également des micropores, ayant généralement un diamètre de quelques angstroems, situés à l'intérieur des parois de la matrice et généralement non monodisperses, tout en respectant un taux de porosité dans les limites générales définies ci-dessus. En ce qui concerne la morphologie poreuse de ces films, typiquement, dans le cas d'un rapport CTAB/TEOS de 0,1 et sans post-traitement, les mésopores représentent généralement 2/3 du volume de vide et les micropores représentent généralement 1/3 du volume de vide.

Selon un deuxième mode de réalisation, le revêtement poreux utilisé dans la présente invention pour ses propriétés antisalissure est un revêtement microporeux. Dans ce deuxième mode de réalisation, le revêtement poreux comprend uniquement des micropores, et doit présenter un taux de porosité dans les limites générales définies ci-dessus, mais également un taux de remplissage volumique potentiel du revêtement par l'acide oléique suffisant.

Sans vouloir être limités par une théorie particulière, les inventeurs pensent qu'en dessous d'une certaine taille de micropore, le réseau microporeux devient inaccessible à l'acide oléique, ce qui expliquerait que certains revêtements microporeux n'entrent pas dans le cadre de l'invention.

De préférence, le revêtement poreux de l'invention, lorsqu'il comporte une matrice hydrophobe, est un revêtement mésoporeux.

Lorsque le revêtement est rendu hydrophobe par post-traitement, ce qui n'entre pas dans le cadre de l'invention,

il est par ailleurs préférable que le taux de porosité de son précurseur, le revêtement à matrice à base de silice que l'on soumet à la réaction d'hydrophobation, soit supérieur à 30 %, mieux supérieur à 40 %, et encore mieux supérieur à 50%.

Dans leur état final, les films poreux de l'invention ont généralement une épaisseur maximale de l'ordre de quelques $\mu$m, typiquement 5 $\mu$m, et généralement une épaisseur allant de 50 nm à 5 $\mu$m, et préférentiellement de 50 à 500 nm et mieux encore de 80 à 500 nm. Bien évidemment, il est possible de déposer successivement plusieurs films de façon à obtenir un film multicouche d'épaisseur désirée. Les propriétés antisalissure seront d'autant plus marquées que le film poreux sera d'épaisseur élevée, bien qu'un seuil au niveau antisalissure puisse éventuellement être atteint au delà d'une certaine épaisseur, selon la nature du film poreux.

Les revêtements poreux de l'invention peuvent être utilisés pour conférer des propriétés antisalissure à divers articles, transparents ou non, tels que des lentilles ou des ébauches de lentilles optiques, de préférence des lentilles ou des ébauches de lentilles ophtalmiques, des fibres optiques, des vitrages utilisés par exemple dans le domaine aéronautique, dans le domaine du bâtiment, des transports (automobile...), ou dans le domaine de l'aménagement intérieur, par exemple double-vitrage, pare-brise, verre d'aquarium, serre, miroir ou vitrine, des carreaux de cuisine, des écrans tactiles, des écrans d'affichage, des objets préhensibles tels que des poignées, volants, claviers, stylos, du mobilier, ou tout autre article analogue. Cette liste n'est pas limitative, bien entendu.

Le support sur lequel les films poreux sont déposés peut être constitué de tout matériau solide, transparent ou non transparent, tels que du verre minéral, une céramique, une vitrocéramique, un métal ou un verre organique, par exemple une matière plastique thermoplastique ou thermodurcissable. De préférence, le support est un substrat en verre minéral ou en verre organique, de préférence transparent. Mieux, le support est un substrat fait d'une matière plastique transparente.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclooléfines tels que les copolymères éthylène/norbornène ou éthylène/cyclopentadiène et leurs combinaisons.

Par (co)polymère, on entend un copolymère ou un polymère. Par (méth)acrylate, on entend un acrylate ou un méthacrylate.

Parmi les substrats préférés selon l'invention, on peut citer des substrats obtenus par polymérisation des (métha)crylates d'alkyle, en particulier des (méth)acrylates d'alkyle en $C_1$-$C_4$, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Comme exemples de (co)polymères d'allyl carbonates de polyols, on peut citer les (co)polymères d'éthylèneglycol bis (allyl carbonate), de diéthylèneglycol bis 2-méthyl carbonate, de diéthylèneglycol bis (allyl carbonate), d'éthylèneglycol bis (2-chloro allyl carbonate), de triéthylèneglycol bis (allyl carbonate), de 1,3-propanédiol bis (allyl carbonate), de propylèneglycol bis (2-éthyl allyl carbonate), de 1,3-butènediol bis (allyl carbonate), de 1,4-butènediol bis (2-bromo allyl carbonate), de dipropylèneglycol bis (allyl carbonate), de triméthylèneglycol bis (2-éthyl allyl carbonate), de pentaméthylèneglycol bis (allyl carbonate), d'isopropylène bisphénol A bis (allyl carbonate).

Les substrats particulièrement recommandés sont les substrats obtenus par (co)polymérisation du bis allyl carbonate du diéthylèneglycol, vendu, par exemple, sous la dénomination commerciale CR 39® par la société PPG Industries (lentilles ORMA® ESSILOR).

Parmi les substrats également particulièrement recommandés, on peut citer les substrats obtenus par polymérisation des monomères thio(méth)acryliques, tels que ceux décrits dans la demande de brevet français FR 2734827 et les polycarbonates.

Bien évidemment, les substrats peuvent être obtenus par polymérisation de mélanges des monomères ci-dessus, ou peuvent encore comprendre des mélanges de ces polymères et (co)polymères.

Les films poreux de l'invention peuvent être formés sur une partie au moins de la surface principale d'un support (substrat) nu, c'est-à-dire non revêtu, ou déjà revêtu d'un ou plusieurs revêtements fonctionnels.

De préférence, le support de l'invention est un substrat de lentille ophtalmique. En optique ophtalmique, il est bien connu de revêtir une surface principale d'un substrat en matériau organique transparent, par exemple une lentille ophtalmique, avec un ou plusieurs revêtements fonctionnels pour améliorer les propriétés optiques et/ou mécaniques de la lentille finale. Aussi, la surface principale du support peut être préalablement pourvue d'un revêtement de primaire améliorant la résistance aux chocs (primaire antichoc) et/ou l'adhésion des couches ultérieures dans le produit final, d'un revêtement résistant à l'abrasion et/ou aux rayures (hard coat), d'un revêtement antireflet, d'un revêtement polarisé, d'un revêtement photochrome, d'un revêtement antistatique, d'un revêtement coloré ou d'un empilement de deux ou

plus de ces revêtements.

Les revêtements de primaire améliorant la résistance au choc sont de préférence des latex de polyuréthane ou des latex acryliques.

Les revêtements résistant à l'abrasion et/ou aux rayures sont de préférence des revêtements durs à base de poly(méth)acrylates ou de silicones. Parmi les revêtements durs anti-abrasion et/ou anti-rayures recommandés dans la présente invention, on peut citer les revêtements obtenus à partir de compositions à base d'hydrolysats de silane, en particulier d'hydrolysats d'époxysilane telles que celles décrites dans la demande de brevet français FR 2702486 et dans les brevets US 4,211,823 et US 5,015,523.

Dans un mode de réalisation recommandé, le film poreux de l'invention est déposé sur un revêtement antireflet classique monocouche ou multicouche.

Etant donné que le film poreux de l'invention possède des propriétés antisalissure, il n'est pas utile de le revêtir d'une couche hydrophobe et/ou oléophobe (top coat). Il constitue généralement la couche externe de l'empilement d'une ou plusieurs couches déposé à la surface du substrat, c'est-à-dire la couche la plus éloignée du substrat.

Le film poreux selon l'invention peut également être déposé sur un revêtement anti-abrasion, possédant un indice de réfraction élevé (typiquement de 1,55 à 1,65, préférentiellement de 1,55 à 1,60, le film poreux exerçant alors une fonction antireflet.

Il est efficace en particulier contre les salissures d'origine organique : traces de doigts, sueur (sébum), insectes, etc, et principalement traces de doigts et sueur.

Les exemples ci-dessous illustrent la présente invention sans la limiter. Sauf indication contraire, tous les pourcentages sont exprimés en masse. Tous les indices de réfraction sont exprimés à $\lambda$ = 632,8 nm et T = 20-25°C.

EXEMPLES

A) Réactifs et matériel utilisés pour synthétiser les films poreux

Le TEOS de formule $Si(OC_2H_5)_4$ a été employé en tant qu'agent précurseur inorganique de formule (I), et le CTAB de formule $C_{16}H_{33}N(CH_3)_3Br$ a été employé en tant qu'agent porogène. Le composé réactif hydrophobe employé dans quelques exemples est l'hexaméthyldisilazane (HMDS).

Les sols ont été préparés en utilisant l'éthanol absolu en tant que solvant organique et l'acide chlorhydrique dilué (de façon à obtenir un pH=1,25) en tant que catalyseur d'hydrolyse.

L'agent précurseur hydrophobe, lorsqu'il est utilisé, est le MTEOS (Méthyltriéthoxysilane).

Les revêtements ont été déposés sur des verres comprenant un substrat de lentille ORMA® ESSILOR (0.00, sauf pour les mesures de réflexion : -2.00), d'indice de réfraction égal à 1,50, de 1,1 mm d'épaisseur, de rayon de courbure compris entre 80 et 180 mm et de diamètre 65 à 70 mm. Ce substrat est revêtu du revêtement anti-abrasion et anti-rayures divulgué dans l'exemple 3 du brevet EP 0614957 (d'indice de réfraction égal à 1,48 et de 3,5 $\mu$m d'épaisseur), à base de GLYMO, DMDES, silice colloïdale et acétylacétonate d'aluminium.

B) Détermination de la porosité et de la morphologie poreuse

La caractérisation de la porosité des revêtements préparés a été effectuée en combinant deux techniques : l'ellipsométrie infrarouge et la porosimétrie ellipsométrique. La première permet de déterminer l'indice de réfraction de la matrice à base de silice et le taux de porosité (porosité totale) des revêtements. Elle est décrite en détail dans A. Brunet-Bruneau, S. Fisson, G. Vuye, J. Rivory J. Appl. Phys. 2000, 87, 7303-7309, et A. Brunet-Bruneau, S. Fisson, B. Gallas, G. Vuye, J. Rivory Thin Solid Films 2000, 377-378, 57-61. La seconde permet de quantifier les volumes micro et mésoporeux. Elle est décrite dans M. R. Baklanov, K. P. Mogilnikov, V. G. Polovinkin, F. N. Dultsev J. Vac. Sci. Technol. B 2000, 18, 1385-1391. Un bref rappel de cette technique est donné ci-après.

Porosimétrie ellipsométrique

La porosimétrie ellipsométrique permet d'obtenir des isothermes d'adsorption sur des revêtements de faible épaisseur, en déterminant par une mesure ellipsométrique les quantités adsorbées. Contrairement aux méthodes volumétriques, elle utilise une technique de détection optique de la condensation. Lors de l'adsorption, du fait de la taille nanométrique des pores, l'adsorbat, ici l'éthanol, condense à une pression P inférieure à sa pression de vapeur saturante $P_0$. La densité de l'adsorbat, et donc son indice de réfraction, augmentent sensiblement, ce qui change les propriétés optiques du film.

Le substrat revêtu du film poreux est placé dans une cellule sous vide, régulée en température (proche de la température ambiante). La cellule est pompée jusqu'à $10^{-7}$ Torr. Une première mesure ellipsométrique est effectuée. La pression de vapeur P dans l'enceinte est ensuite augmentée pas à pas jusqu'à saturation $P_0$ pour obtenir la branche

d'adsorption, puis la pression est diminuée pour mesurer la désorption. Après chaque étape d'équilibrage de la pression, une mesure ellipsométrique est effectuée (sous une incidence de 75°). L'indice de réfraction mesuré n est de la forme :

$$n = (1\text{-}p)n_s + xpn_{liq} + (1\text{-}x)pn_{vap}$$

où x est le taux de remplissage de la porosité ($0 \leq x \leq 1$), p et $n_s$ sont respectivement le taux de porosité et l'indice de réfraction de la matrice à base de silice (tous deux déterminés par ellipsométrie infrarouge), l'indice de la vapeur $n_{vap}$ est pris égal à 1 (faible densité), et on considère que l'indice de réfraction $n_{liq}$ de l'adsorbat condensé dans les pores est égal à celui du liquide macroscopique.

L'indice de réfraction mesuré est directement relié au taux de remplissage, ce qui permet d'obtenir des isothermes taux de remplissage $x = f(P/P_0)$. Ces courbes sont interprétées de la même façon que les isothermes d'adsorption obtenues sur des poudres (cf. F. Rouquerol, J. Rouquerol, K. Sing Adsorption by powders and porous solids. Principles, methodology and applications, Academic Press, 1999), et permettent de déterminer le volume microporeux, et, dans le cas d'un matériau mésoporeux, le volume mésoporeux, ainsi que le diamètre des mésopores.

C) Revêtements poreux à matrice à base de silice non hydrophobe

1. Mode opératoire général de préparation du sol de silice

Les rapports molaires des constituants du sol de silice sont les suivants : TEOS / éthanol / HCl-$H_2O$ = 1 : 3,8 : 5. Le TEOS est hydrolysé puis partiellement condensé par chauffage pendant 1 h à 60 °C en milieu éthanol/acide chlorhydrique dilué, dans un ballon muni d'un réfrigérant.

Le sol de silice élaboré est constitué de petits amas polymériques de silice partiellement condensée, comportant une grande quantité de fonctions silanol.

2. Mode opératoire général de dépôt d'un film à matrice de silice

On prépare une solution stock d'agent porogène contenant 48,7 g de CTAB par litre d'éthanol. Sa dissolution peut être facilitée par l'utilisation d'ultrasons pendant quelques secondes.

3 mL du sol de silice préparé ci-dessus, revenu à température ambiante, sont ajoutés à un certain volume de la solution stock de CTAB sous agitation, de sorte que le rapport molaire CTAB/Si soit tel que défini dans le tableau 1. Puis, on dépose par centrifugation quelques gouttes du mélange ainsi préparé sur un substrat en verre ou un disque de silicium (2 minutes de rotation à 3000 tours/min, accélération d'environ 2000 tours/min/s), sous une humidité relative de 45-50 % (T = 18-20 °C). Le substrat n'a pas généralement subi de préparation de surface. Ce protocole permet de préparer les films poreux des exemples 1-3.

3. Mode opératoire général de consolidation du film et d'élimination du tensioactif CTAB

Le film subit ensuite un traitement thermique destiné à avancer le degré de polymérisation du réseau de silice (consolidation). Le substrat revêtu du film obtenu dans le paragraphe 2 ci-dessus est consolidé thermiquement dans une étuve à 100 °C pendant 12h, puis le CTAB est éliminé par extraction avec un solvant organique de la façon suivante. Le substrat revêtu du film consolidé est placé dans la cuve d'un sonicateur de marque Elmasonic, contenant de l'isopropanol, à température ambiante pendant 15 min. L'homogénéité des ultrasons est assurée par la mise en route de la fonction « sweep » de l'appareil. Le CTAB peut aussi être éliminé en plaçant le substrat revêtu du film consolidé 3x15 min dans un bécher d'acétone placé dans une cuve à ultrasons. Il est à noter que les caractéristiques indiquées dans le tableau 1 ci-après ont été mesurées sur des films ayant subi une calcination à 450 °C et non pas une extraction pour l'élimination de l'agent porogène.

A l'issue de cette étape, on récupère un substrat revêtu d'un film mésoporeux. Les films obtenus ont une épaisseur d'environ 250 à 300 nm sauf lors des mesures de réflexion (sauf exemple C1 : 200 nm), où des films ayant une épaisseur de 80-120 nm (dilution par de l'éthanol absolu) ont été utilisés. Les épaisseurs ont été mesurées au profilomètre.

4. Exemple comparatif

L'exemple comparatif C1 diffère des exemples 1-3 en ce qu'aucun agent porogène n'a été utilisé lors de la préparation du film. Aucune étape d'élimination d'agent porogène n'a donc été réalisée, mais le film a tout de même été

lavé à l'isopropanol. Il est préférable de conduire l'étape de consolidation thermique du film de l'exemple C1 à 70 °C plutôt qu'à 100 °C comme dans les exemples 1-3 afin d'éviter la fissuration du film, a moins que le film n'ait été obtenu par application d'une solution diluée dans de l'éthanol absolu.

5. Caractérisation des films

Les caractéristiques des films obtenus sont présentées dans le tableau 1, qui indique le taux de porosité des films, ainsi que la porosité due aux micropores (ligne porosité / micropores) et celle due aux mésopores (ligne porosité / mésopores). La structure des films a été observée par analyse de diffraction des rayons X. Elle n'est pas modifiée par l'étape d'élimination de l'agent porogène.

**Tableau 1**

| Exemple | 1 (*) | 2 (*) | 3 (*) | C1 |
|---|---|---|---|---|
| Rapport molaire CTAB/Si | 0,06 | 0,10 | 0,14 | 0 |
| Structure obtenue | Présence de mésoporosité Pas de structuration | Hexagonale 3d (micelles sphériques) : Film mésoporeux | Cubique : Film mésoporeux | Pas de mesoporosité ni de structuration : Film microporeux |
| Taux de porosité | 32% | 55% | 58% | 18% |
| Porosité / micropores | | 22% | 14,5 % | 18% |
| Porosité / mésopores | | 33% | 43,5 % (**) | 0% |
| Indice de réfraction | 1,33 | 1,25 | | 1,40 |
| (*) Elimination de l'agent porogène par calcination. (**) Estimation | | | | |

6. Evaluation des propriétés de nettoyabilité

a) Test de nettoyabilité

500 microgrammes de salissure artificielle sont déposés sur la surface convexe d'une lentille ophtalmique équipée ou non d'un revêtement antisalissure conforme à l'invention, sous la forme d'une tache de salissure de 20 mm de diamètre, sous forme de cercles concentriques. La salissure artificielle (sébum artificiel) utilisée dans ce test comprend comme constituant essentiel l'acide oléique.

La lentille est alors soumise à un essuyage automatique à l'aide d'un tissu en coton de la société Berkshire fixé à un robot mécanique, sous une charge de 750 g (mouvement de va et vient parfaitement reproductible). Une sollicitation d'essuyage correspond à un aller ou un retour du tissu en coton. Le débattement total lors du mouvement du tissu sur la lentille est de 40 mm, soit 20 mm de part et d'autre d'un point centré sur la salissure.

La valeur du taux de diffusion en transmission (Haze, noté H) à travers la lentille est mesurée avec un appareil Hazeguard XL 211 Plus, après un nombre de sollicitations égal à 2, 10, 20, 40, 70, 100, 150 et 200. La valeur indiquée est une moyenne de trois mesures effectuées sur 3 verres différents (1 mesure par verre).

Le taux de diffusion H est obtenu conformément à la norme ASTM D1003 *"Standard test method for haze and luminous transmittance of transparent plastics"*, en mesurant simultanément la quantité totale de lumière transmise par le verre (I totale) et la quantité de lumière diffuse, en transmission (I diffuse : quantité de lumière transmise et déviée d'un angle supérieur à 2.5° par rapport à la direction normale) :

$$H(\%) = \frac{I\ diffuse}{I\ totale} \times 100$$

Le test de nettoyabilité permet notamment de déterminer le nombre d'essuyages nécessaire pour établir un

taux de diffusion H inférieur ou égal à 0,5 %, qui correspond à un niveau de propreté satisfaisant de la lentille.

Il est habituellement observé des variations de diffusion selon les conditions de l'expérience (température, humidité, consistance de la salissure...). En particulier, les taux de diffusion initiaux (immédiatement après dépôt de la salissure) peuvent varier significativement d'une série d'exemples à l'autre. Les propriétés des films pour chaque série d'exemples et d'exemples comparatifs ont toujours été mesurées à partir de films obtenus dans les mêmes conditions et les résultats sont donc directement comparables.

b) Résultats

La figure 1 permet de comparer les performances des lentilles des exemples 2, C1, et du même substrat simplement revêtu du revêtement anti-abrasion à base de silanes divulgué dans l'exemple 3 du brevet EP 0614957 (exemple C0).

On constate qu'une dizaine de sollicitations seulement permettent de nettoyer la lentille de l'exemple 2, une performance comparable à celle d'un revêtement antisalissure commercial tel que celui obtenu à partir de la composition OPTOOL DSX®, commercialisée par Daikin Industries (résine fluorée comprenant des groupes perfluoropropylène répondant à la formule du brevet US 6,183,872), tandis que les lentilles des exemples comparatifs C0 (pas de revêtement antisalissure, c'est-à-dire lentille uniquement revêtue du revêtement anti-abrasion et anti-rayures) et C1 (revêtement poreux ayant un taux de porosité insuffisant et dont le volume poreux est insuffisamment accessible à l'acide oléique) ne sont toujours pas sous le seuil requis (H<0, 5%) après 200 sollicitations.

La figure 1 démontre donc que l'accessibilité au volume poreux d'un revêtement poreux doit être suffisante pour lui conférer des propriétés de nettoyabilité satisfaisantes.

La figure 2 permet de comparer les performances des lentilles des exemples 1, 2 et 3, et révèle que plus la porosité du revêtement poreux selon l'invention est importante, plus la lentille se nettoie rapidement.

b-1) Cas de dépôts successifs

Après le dépôt d'une salissure artificielle sur la lentille de l'exemple 2 (salissure identique à celle décrite ci-dessus dans le test de nettoyabilité), et essuyage automatique (200 sollicitations) à l'aide d'un tissu en coton, un dépôt identique est à nouveau réalisé sur la même lentille. L'expérience est renouvelée plusieurs fois (Nouveau dépôt de salissure et utilisation d'un tissu propre à chaque expérience). Les figures 3 et 4 présentent l'évolution du taux de diffusion en fonction du nombre de sollicitations de la lentille de l'exemple 2 ayant subi de 1 à 10 dépôts successifs (3 dépôts successifs sur la figure 3, 10 dépôts successifs sur la figure 4).

Même après plusieurs dépôts, le revêtement mésoporeux de l'exemple 2 reste plus performant en termes de nettoyabilité que le revêtement de l'exemple C1, et donc que celui de l'exemple C0 (pas de revêtement antisalissure). La nettoyabilité du revêtement de l'exemple 2 décroît en fonction du nombre de dépôts effectués. Toutefois, après 10 dépôts, le système n'évolue plus, le revêtement devant être saturé en salissure.

Après 3 dépôts, la facilité avec laquelle le revêtement mésoporeux de l'exemple 2 peut être nettoyé est comparable à celle du revêtement antisalissure formé à partir de la composition commerciale OPTOOL DSX®, ou de revêtements moins performants que ce dernier, par exemple le revêtement formé à partir de la composition KY130® (répondant à la formule du brevet JP 2005-187936), commercialisée par Shin-Etsu Chemical.

Au contraire du revêtement de l'exemple 2, le revêtement antisalissure formé à partir de la composition OPTOOL DSX®, qui n'a pas une structure poreuse, conserve le même comportement lorsqu'il est sali plusieurs fois.

b-2) Régénération d'un revêtement poreux conforme à l'invention

Comme le montre la figure 5, un revêtement poreux conforme à l'invention, souillé une ou plusieurs fois, peut retrouver ses propriétés initiales après avoir été soumis à un lavage. Il est donc en quelques sortes "régénérable". Le revêtement mésoporeux de l'exemple 2 voit sa réflexion augmenter après avoir été soumis à un dépôt de salissure artificielle (même dépôt que dans le test de nettoyabilité : la salissure diffuse la lumière). Un essuyage de la salissure avec un robot mécanique (100 sollicitations) ne permet pas de revenir au niveau de réflexion initial, alors qu'un lavage au savon à l'eau courante permet de diminuer la reflexion à un niveau quasi-équivalent au niveau initial, et qu'un lavage supplémentaire à l'acétone (15 minutes aux ultrasons) permet d'obtenir une courbe de réflexion se superposant à la courbe de réflexion initiale (avant pollution).

Les valeurs du coefficient de réflexion moyen (Rv) sur 380-780 nm sont :

- avant salissure : 0,9%
- après dépôt de salissure : 2,9%
- après 100 sollicitations : 3,4%

- après lavage savon : 1,1 %
- après lavage supplémentaire à l'acétone : 0,9%.

Avant chaque mesure de réflexion, le revêtement a été séché à l'étuve à 70°C pendant 10 minutes pour éliminer les traces d'eau éventuellement piégées par la porosité.

Plusieurs régénérations successives peuvent être effectuées, sans diminution notable des propriétés optiques et de nettoyabilité des revêtements poreux de l'invention.

Bien que le revêtement mésoporeux de l'exemple 2, après lavage au savon, soit plus facile à nettoyer qu'un revêtement antisalissure du commerce très performant, tel que celui obtenu à partir de la composition OPTOOL DSX®, il est légèrement moins nettoyable que le même revêtement n'ayant jamais été souillé ni lavé au savon. Ceci pourrait s'expliquer par le fait que des molécules de tensioactif de la solution savonneuse resteraient présentes dans les mésopores du revêtement à l'issue du lavage, limitant légèrement la facilité du nettoyage en cas de souillure.

c) Evaluation des propriétés auto-nettoyantes

Les propriétés d'auto-nettoyage des revêtements de l'invention peuvent être évaluées en mesurant le taux de diffusion à travers une lentille revêtue d'un tel revêtement juste après le dépôt d'une salissure artificielle, par comparaison avec un revêtement non auto-nettoyant, et en suivant l'évolution du taux de diffusion au cours du temps. Le dépôt est réalisé de la même façon que pour le test de nettoyabilité, sans essuyage.

La figure 6 montre que le taux de diffusion H de la lentille de l'exemple 2 juste après dépôt d'une salissure est significativement plus faible que celle des lentilles des exemples comparatifs C0 et C1, qui, elles, sont très élevées (> 10 %). De plus, contrairement aux deux lentilles comparatives, qui ne possèdent pas un revêtement capable de s'imprégner de la salissure, celle de l'exemple 2, équipée du revêtement mésoporeux de l'invention, voit son taux de diffusion diminuer au cours du temps (mesure à t = 1 jour). Ceci indique que l'état de propreté de la surface de la lentille s'améliore sans qu'une intervention extérieure ne soit nécessaire.

La figure 7 permet de comparer les performances des lentilles des exemples 1, 2 et 3 en matière d'auto-nettoyage, et révèle que plus la porosité du revêtement poreux selon l'invention est importante, plus la lentille s'auto-nettoie rapidement. Ainsi, le taux de diffusion H de la lentille de l'exemple 3 est 40 % plus faible au bout de 10 minutes que celui de la lentille de l'exemple 1 au bout de 15 minutes.

c-1) Mise en évidence d'un changement de morphologie de la salissure au contact d'un revêtement auto-nettoyant conforme à l'invention

La figure 8 présente l'état de surface des lentilles des exemples C0, C1 et 2, immédiatement après dépôt d'une salissure artificielle (agrandi 1000 fois). Il est possible d'observer sur le revêtement mésoporeux de l'exemple 2 un front plus clair près des amas de salissure. Il s'agit de la partie liquide de la salissure qui imprègne progressivement le revêtement poreux. Il est indiqué sur le cliché par un trait blanc.

Ce front progresse au cours du temps, comme le montrent les clichés de la figure 8 pris respectivement 15 minutes et 1h30 après le dépôt de la salissure (agrandissement x 500 pour ces deux derniers clichés), ainsi que la figure 9, qui représente la longueur de ce front liquide en fontion du temps. Le comportement de la salissure dans les couches est similaire à la loi de Washburn $z^2 = C \times t$, dans laquelle z est la longueur du front d'imprégnation sur une surface poreuse, t le temps, et $C = \gamma \times R \times \cos(\theta y/2\eta)$, avec $\theta y$ désignant l'angle de contact, R la taille moyenne des pores, $\gamma$ et $\eta$ respectivement la tension superficielle et la viscosité de la salissure, excepté que dans la formule ci-dessus R est à remplacer par une fonction f(R) liée à la porosité.

Les enseignements de la figure 9 sont en accord avec les résultats évoqués précédemment : plus le taux de porosité du revêtement est élevé, plus la cinétique d'imprégnation à l'intérieur du revêtement est élevée, et donc meilleures sont les propriétés d'auto-nettoyage.

D) Revêtements poreux à matrice à base de silice rendue hydrophobe par greffage post-synthétique (ces revêtements n'entrent pas dans le cadre de l'invention

1. Mode opératoire général de traitement d'un film poreux par un composé réactif hydrophobe porteur d'au moins un groupe hydrophobe (greffage post-synthétique réalisé après l'étape d'élimination de l'agent porogène)

Le substrat revêtu du film poreux obtenu dans le paragraphe C) 3) ci-dessus est introduit pendant 15 minutes dans la cuve d'un bac à ultrasons de marque Elmasonic, contenant du HMDS, à température ambiante. L'homogénéité des ultrasons est assurée par la mise en route de la fonction « sweep » de l'appareil. Le bon déroulement du greffage de groupes triméthylsilyle peut être suivi par spectroscopie IRTF effectuée sur le film. Les spectres IRTF montrent une

disparition très importante, voire totale, des groupes silanols. Les verres sont ensuite rincés à l'alcool isopropylique pour éliminer l'excès de HMDS.

Ce protocole permet de préparer les films poreux des exemples 4, 5, 6 et C2, qui sont respectivement obtenus par hydrophobation au HMDS des films des exemples 1, 2, 3 et C1. Il a été constaté que dans le cas du revêtement de l'exemple 2, la perte de volume poreux engendrée par son hydrophobation était d'environ 25%, soit un taux de porosité de 41% (exemple 5). Elle atteint 56 % lors du passage du revêtement de l'exemple C1 à celui de l'exemple C2. Le taux de porosité est alors de 8% (pour un film calciné).

2.1 Evaluation des propriétés de nettoyabilité à une épaisseur de 300 nm

Le test de nettoyabilité a été conduit de la même façon que précédemment.

La figure 10 permet de comparer les performances en matière de nettoyabilité des lentilles des exemples 1 à 6, et confirme, pour ce qui est des lentilles des exemples 4-6, la tendance qui avait déjà été observée pour les lentilles des exemples 1-3, à savoir que plus la porosité du revêtement poreux selon l'invention est importante, plus la lentille se nettoie rapidement.

L'hydrophobation du revêtement poreux par le HMDS s'accompagne d'une diminution de la nettoyabilité des lentilles. Toutefois, lorsque l'accessibilité à l'acide oléique et le taux de porosité sont suffisamment élevés, cette diminution est faible. Ainsi, la nettoyabilité des lentilles des exemples 5 et 6 reste très intéressante.

2.2 Evaluation des propriétés de nettoyabilité à des épaisseurs variables (50-500 nm).

Le test de nettoyabilité est mis en oeuvre de la même façon que précédemment sur des lentilles ophtalmiques revêtues de revêtements d'épaisseurs différentes et dont les caractéristiques figurent dans le tableau 2 ci-dessous. Les exemples 10, 11 et l'exemple 2 (correspondant à des revêtements selon l'invention non post-traités) sont testés en parallèle pour visualiser les différences entre revêtement hydrophobe (Exemples 5, 7 et 9 post-traités) et non hydrophobe.

**Tableau 2**

| Exemple | 5 (non conforme à l'invention) | 7 (non conforme à l'invention) | 9 (non conforme à l'invention) | 10 | 11 | 2 (Rappel) | C1 (Rappel) |
|---|---|---|---|---|---|---|---|
| Rapport molaire CTAB/Si | 0,1 | 0,1 | 0,1 | 0,1 | 0,1 | 0,1 | 0 |
| Post-traitement hydrophobe (HMDS) | Oui | Oui | Oui | Non | Non | Non | Non |
| Taux de porosité volumique | 41% | 41% | 41% | 55% | 55% | 55% | 18% |
| Epaisseur revêtement (nm) | 300 | 50 | 500 | 50 | 500 | 300 | 200 |
| Les revêtements du tableau 2 sont tous mésoporeux sauf celui de l'exemple C1 (microporeux). | | | | | | | |

La figure 12 permet de comparer les propriétés de nettoyabilité des revêtements de différentes épaisseurs.

Dans tous les cas, on observe une amélioration significative de la nettoyabilité par rapport à un revêtement microporeux. Dans le cas du revêtement mésoporeux de l'exemple 7, rendu hydrophobe par post-traitement HMDS, et d'épaisseur 50 nm, on constate un comportement supérieur à un revêtement microporeux en fin de cycle de nettoyage, On constate que, plus l'épaisseur du revêtement poreux est importante, meilleure est la nettoyabilité du revêtement.

Par ailleurs, les revêtements mésoporeux n'ayant pas été rendus hydrophobes par post-traitement sont significativement plus performants, à une épaisseur donnée, que leurs homologues rendus hydrophobes par post-traitement.

3. Evaluation des propriétés auto-nettoyantes

Les propriétés d'auto-nettoyage des revêtements poreux hydrophobes de l'invention ont été évaluées de la même façon que dans le cas des revêtements non hydrophobes, en mesurant le taux de diffusion à travers une lentille

revêtue d'un tel revêtement juste après le dépôt d'une salissure artificielle.

La figure 11 montre que le taux de diffusion H de la lentille de l'exemple 4 juste après dépôt d'une salissure n'est que légèrement inférieure à celle des lentilles des exemples comparatifs C0 et C1. Par ailleurs, ces résultats confirment la tendance selon laquelle plus le taux de porosité est élevé, plus la lentille s'auto-nettoie rapidement.

Il a été constaté que, contrairement aux deux lentilles comparatives des exemples C2 (H = 4,5, stable dans le temps) et C1 (H = 4,3, stable dans le temps), celles des exemples 4-6, équipées du revêtement poreux de l'invention, voyaient leur taux de diffusion diminuer au cours du temps (mesure à t = 20 minutes), ce qui indique que l'état de propreté de la surface de la lentille s'améliore sans qu'une intervention extérieure ne soit nécessaire. Le taux de diffusion à travers la lentille de l'exemple 5 a ainsi diminué de 11 % en 20 minutes et de 19 % en 3 heures (passage de H = 2,91 à H = 2,59 à t = 20 minutes et à H = 2,37 à t = 3 heures). Dans les mêmes conditions, le taux de diffusion à travers la lentille de l'exemple 2 diminuait de 27 % en 20 minutes et de 42 % en 3 heures (passage de H = 2,0 à H = 1,45 à t = 20 minutes et à H = 1,16 à t = 3 heures).

Enfin, un essai a été mené sur un verre revêtu d'un revêtement mésoporeux présentant une épaisseur de 500 nm au lieu de 300 nm. Le taux de diffusion baisse de 20% en 50 minutes au lieu de 3 heures pour une épaisseur de 300 nm.

L'hydrophobation totale par post-traitement est donc plutôt défavorable aux propriétés d'auto-nettoyage, le revêtement poreux hydrophobe étant imprégné moins vite par la salissure que le même revêtement avant hydrophobation. Deux phénomènes pourraient expliquer ce comportement du revêtement poreux hydrophobe : d'une part, son plus faible volume poreux, d'autre part la plus faible affinité de la salissure pour la surface (due à une surface hydrophobe), moins favorable à l'étalement de la salissure.

E) Revêtements poreux à matrice à base de silice rendue hydrophobe par incorporation d'un agent précurseur hydrophobe dans le sol précurseur

1) Modes opératoires

1.1) Préparation du sol précurseur

Une solution de CTAB dans l'éthanol est préparée, dans laquelle on ajoute le MTEOS non hydrolysé. Cette solution est placée sous agitation. Le sol de silice dont la préparation est décrite dans le paragraphe C) 1) ci-dessus, une fois refroidi, est ajouté à la solution de MTEOS. Cette étape est réalisée de telle sorte que dans le mélange final les rapports molaires soient ceux indiqués dans le Tableau 3. Puis on procède au dépôt après 1 min 30 d'agitation.

**Tableau 3**

| Proportion de MTEOS | $H_2O$/MTEOS | CTAB/Si |
|---|---|---|
| 40% | 3,5 | 0.16 |

1.2) Conditions de dépôt, traitement thermique et élimination du tensioactif par lavage

Le mélange est déposé par centrifugation (spin-coating) à 3000 tours/min pendant 2 minutes. Contrairement aux films uniquement à base de TEOS, le taux d'humidité ambiante ne joue pas ou faiblement. Les couches obtenues subissent ensuite un traitement thermique (110°C pendant 12h) destiné à avancer le degré de polymérisation du réseau de silice.

Le CTAB est éliminé par une technique douce pour préserver les groupements hydrophobes. Les échantillons sont placés pendant 2x15 min dans la cuve d'un sonificateur de marque Elmasonic, contenant de l'acétone, à température ambiante. La structure des films préparés via cette synthèse est une structure hexagonale 3D.

2) Evaluation des propriétés auto-nettoyantes

Les propriétés d'auto-nettoyage du revêtement de l'invention obtenu selon le protocole ci-dessus (noté exemple 12), sont évaluées en mesurant le taux de diffusion à travers une lentille revêtue d'un tel revêtement juste après le dépôt d'une salissure artificielle, en suivant l'évolution du taux de diffusion au cours du temps.

Le dépôt est réalisé de la même façon que pour le test de nettoyabilité, sans essuyage. La figure 13 représente l'évolution de la diffusion engendrée par la salissure artificielle au cours du temps pour un revêtement mésoporeux comportant la matrice à base de silice rendue hydrophobe par incorporation d'un agent précurseur hydrophobe (MTEOS) dans le sol précurseur tel que décrit ci-dessus, en comparaison avec le revêtement mésoporeux de l'exemple 2 de l'invention.

On constate des propriétés auto-nettoyantes très similaires à celles du revêtement de l'exemple 2, ce qui démontre les excellentes propriétés auto-nettoyantes de ce revêtement. Contrairement à l'hydrophobation par post-traitement, les caractéristiques d'auto-nettoyage sont très peu affectées par l'incorporation d'un agent précurseur hydrophobe dans le sol précurseur.

F) Protocole du test de remplissage par l'acide oléique en vue de la détermination du taux de remplissage volumique potentiel d'un revêtement poreux par l'acide oléique

Le substrat porteur du revêtement dont on veut mesurer le taux de remplissage volumique potentiel est tout d'abord lavé dans une solution d'isopropanol à température ambiante pendant 15 minutes, puis une solution d'acide oléique est déposée par centrifugation sur ce revêtement (30 secondes de rotation à 2000 tours/min, accélération d'environ 2000 tours/min/s). La procédure est répétée 3 fois pour s'assurer de la pénétration de la solution. Le revêtement est alors essuyé par le biais d'un tissu cémoi pour éliminer l'excès d'acide oléique et séché à l'étuve à 70 °C pendant 10 minutes pour éliminer les traces d'eau éventuellement piégées dans la porosité, puis son indice de réfraction est mesuré.

Détermination du taux de remplissage volumique potentiel par l'acide oléique du revêtement poreux de l'exemple 2

Le taux de porosité volumique, mesuré par éllipsométrie IR, de ce revêtement est de 55 %.

La relation entre l'indice de réfraction $n_{calculé}$ d'un film poreux à matrice de silice et son taux de porosité p fait intervenir la nature des composants occupant cette porosité :

$$\text{ncalculé} = (1-\text{p})\times\text{ns} + \sum_{1}^{n}\text{p}(\text{i})\times\text{npores}(\text{i})$$

où p(i) représente le taux de porosité occupé par le constituant i (air, eau, acide oléique...), $n_{pores(i)}$ désigne l'indice de réfraction du constituant i et $n_s$ désigne l'indice de réfraction de la matrice (1,488 dans le cas d'une matrice de silice). Dans cette formule, la somme des p(i) est égale au taux de porosité p.

Dans l'hypothèse où la porosité est occupée exclusivement par de l'air et de l'acide oléique, cette relation devient :

$$\text{ncalculé} = (1-\text{p})\times\text{ns} + \text{T}\times\text{p}\times 1{,}46 + (1-\text{T})\times\text{p}$$

avec T désignant le taux de remplissage du volume poreux par l'acide oléique, 1,46 étant l'indice de réfraction de l'acide oléique.

Par exemple, dans le cas où les pores du revêtement de l'exemple 2 sont totalement remplis d'air (sans eau), l'indice de réfraction calculé du revêtement (exempt d'eau, initialement lavé à l'alcool isopropylique) est de 1,22 ($n_{air}$ = 1). Dans le cas où les pores du revêtement de l'exemple 2 sont totalement remplis d'eau, l'indice de réfraction calculé du revêtement (initialement lavé à l'alcool isopropylique puis rempli d'eau) est de 1,40 ($n_{eau}$ = 1,33). Si les pores du revêtement de l'exemple 2 étaient totalement remplis d'acide oléique, l'indice de réfraction calculé du revêtement (initialement lavé à l'alcool isopropylique puis hypothétiquement rempli d'acide oléique) serait de 1,47.

L'indice de réfraction mesuré par ellipsométrie du revêtement de l'exemple 2 imprégné d'acide oléique conformément au protocole du test de remplissage décrit ci-dessus est de 1,465. En supposant que la porosité est occupée exclusivement par de l'air ou de l'acide oléique, on en déduit par le calcul que le volume poreux de ce film est occupé à 97 % par l'acide oléique et à 3 % par de l'air, en volume, soit 53,3 % du volume du film occupé par l'acide oléique et 1,7 % par l'air. Le taux de remplissage potentiel du volume du revêtement poreux par l'acide oléique est donc de 53,3 % en volume.

Il a été vérifié que le spectre de réflexion entre 380 et 780 nm de la surface du substrat revêtue du revêtement poreux de l'exemple 2 (mesure par Système de Mesure de Réflexion (SMR) au moyen d'un spectrophotomètre) se superposait avec le spectre simulé d'un revêtement ayant un taux de porosité de 55 % occupée à 97 % par de l'acide oléique.

Une correspondance parfaite est obtenue entre les grandeurs optiques mesurées (angle de teinte H, chroma C*, réflexion moyenne $R_m$ et réflexion dans le visible $R_v$) et les grandeurs optiques simulées. Le modèle choisi (occupation de la porosité exclusivement par de l'air et de l'acide oléique) est donc exact.

En conclusion, l'acide oléique a accès à la quasi-totalité de la porosité du revêtement de l'exemple 2. Le taux

de remplissage potentiel de son volume poreux par l'acide oléique est de 97 %.

Détermination du taux de remplissage volumique potentiel par l'acide oléique du revêtement poreux de l'exemple C1

Le taux de porosité volumique de ce revêtement est de 18 %.

Selon la relation utilisée précédemment, dans le cas où les pores du revêtement de l'exemple C1 sont totalement remplis d'air (sans eau), l'indice de réfraction calculé du revêtement (exempt d'eau, initialement lavé à l'alcool isopropylique) est de 1,40 ($n_{air}$ = 1).

Si les pores du revêtement de l'exemple C1 étaient totalement remplis d'acide oléique, l'indice de réfraction calculé du revêtement (initialement lavé à l'alcool isopropylique puis hypothétiquement rempli d'acide oléique) serait de 1,483 ($n_{acide\ oléique}$ = 1,46).

Les mesures d'indices de réfraction et la comparaison des spectres mesurés et simulés permettent de conclure que l'acide oléique ne parvient pas à pénétrer dans le réseau poreux du revêtement de l'exemple C1 (taux de remplissage volumique potentiel par l'acide oléique nul). Le spectre de réflexion du revêtement est identique avant et après le test de remplissage.

Détermination du taux de remplissage volumique potentiel par l'acide oléique du revêtement poreux de l'exemple 5 (film mésoporeux greffé par le HMDS)

Le taux de porosité volumique de ce revêtement est de 32 % (cette valeur est issue d'une mesure d'indice de réfraction par ellipsométrie, en supposant le film constitué de silice et d'air). La mesure par ellipsométrie de son indice de réfraction donne une valeur de 1,33.

Si les pores du revêtement de l'exemple 5 étaient totalement remplis d'acide oléique, l'indice de réfraction calculé du revêtement (initialement lavé à l'alcool isopropylique puis hypothétiquement rempli d'acide oléique) serait de 1,479 ($n_{acide\ oléique}$ = 1,46). Etant donné que l'indice de réfraction du revêtement après le test de remplissage décrit précédemment est de 1,46, on en déduit un taux de remplissage du volume poreux par l'acide oléique de 87,1 %. Les spectres de réflexion simulés sont en accord avec les spectres de simulation mesurés. Le taux de remplissage potentiel du volume du revêtement poreux par l'acide oléique est donc de 28 % en volume.

Ces résultats montrent qu'un film mésoporeux dont la matrice a été rendue hydrophobe par un greffage au HMDS conserve des caractéristiques d'accessibilité à l'acide oléique élevées.

Détermination du taux de remplissage volumique potentiel par l'acide oléique du revêtement poreux de l'exemple C2 (obtenu par hydrophobation de C1 au HMDS)

Le taux de porosité volumique de ce revêtement est de 8 %. La mesure par ellipsométrie de son indice de réfraction donne une valeur de 1,45.

Les mesures d'indices de réfraction et la comparaison des spectres mesurés et simulés permettent de conclure que l'acide oléique ne parvient pas à pénétrer dans le réseau poreux du revêtement de l'exemple C2. Ce revêtement ayant un caractère hydrophobe, de l'eau ne peut pas être présente dans ses pores pour bloquer l'accès à l'acide oléique. La taille insuffisante des micropores est selon toute vraisemblance responsable du taux de remplissage volumique potentiel par l'acide oléique de 0 %.

## Revendications

1. Utilisation en tant que revêtement antisalissure d'un revêtement poreux possédant une matrice polysiloxane n'ayant pas été post-traitée par un composé réactif hydrophobe porteur d'au moins un groupe hydrophobe, **caractérisée en ce que** le revêtement poreux :

   - ne présente pas de propriétés photocatalytiques;
   - présente un taux de porosité allant de 25 à 70 % en volume; et
   - possède un volume tel que le taux de remplissage potentiel dudit volume du revêtement poreux par l'acide oléique est d'au moins 25 % en volume.

2. Utilisation selon la revendication 1, **caractérisée en ce que** le revêtement poreux est un revêtement mésoporeux, dont les mésopores ont une taille allant de 2 à 50 nm.

3. Utilisation selon la revendication 1 ou 2, **caractérisée en ce que** la matrice polysiloxane est une matrice obtenue

à partir d'une composition comprenant un précurseur comportant au moins un atome de silicium lié à 4 groupes hydrolysables ou hydroxyle.

4. Utilisation selon la revendication 3, **caractérisée en ce que** ladite matrice polysiloxane est préparée à partir d'au moins un agent précurseur inorganique de formule :

$$Si(X)_4 \qquad (I)$$

dans laquelle les groupes X, identiques ou différents, sont des groupes hydrolysables préférentiellement choisis parmi les groupes alcoxy -O-R, acyloxy -O-C(O)R où R est un groupe alkyle préférentiellement en $C_1$-$C_6$, les halogènes Cl, Br et I est les combinaisons de ces groupes; ou d'un hydrolysat de cet agent précurseur.

5. Utilisation selon l'une quelconque des revendications précédentes, **caractérisée en ce que** la matrice polysiloxane a été préparée à partir d'un sol ne contenant pas d'agent précurseur hydrophobe porteur d'au moins un groupe hydrophobe.

6. Utilisation selon l'une quelconque des revendications 1 à 4, **caractérisée en ce que** la matrice polysiloxane possède un caractère hydrophobe.

7. Utilisation selon la revendication 6, **caractérisée en ce que** la matrice polysiloxane a été préparée à partir d'un sol contenant un agent précurseur hydrophobe porteur d'au moins un groupe hydrophobe.

8. Utilisation selon l'une quelconque des revendications précédentes, **caractérisée en ce que** le revêtement poreux est déposé sur une partie au moins de la surface principale d'un substrat en verre organique ou minéral.

9. Utilisation selon la revendication 8, **caractérisée en ce que** le substrat est revêtu d'un empilement d'une ou plusieurs couches dont ledit revêtement poreux constitue la couche externe.

10. Utilisation selon l'une quelconque des revendications 8 ou 9, **caractérisée en ce que** le substrat est un substrat de lentille optique ou d'une ébauche de lentille optique, de préférence de lentille ophtalmique ou d'une ébauche de lentille ophtalmique.

11. Utilisation selon l'une quelconque des revendications précédentes, **caractérisée en ce que** le revêtement poreux a une épaisseur allant de 50 nm à 5 $\mu$m, de préférence de 50 à 500 nm.

12. Utilisation selon l'une quelconque des revendications précédentes, **caractérisée en ce que** le taux de remplissage potentiel dudit volume du revêtement poreux par l'acide oléique est d'au moins 30 % en volume, de préférence au moins 40 %, mieux encore au moins 45 %.

13. Utilisation selon l'une quelconque des revendications précédentes, **caractérisée en ce que** le revêtement antisalissure est un revêtement auto-nettoyant.

14. Utilisation selon l'une quelconque des revendications précédentes, **caractérisée en ce que** le revêtement poreux est utilisé contre le sébum.

15. Utilisation selon l'une quelconque des revendications précédentes, **caractérisée en ce que** le revêtement poreux utilisé a au préalable reçu au moins un dépôt de salissure puis fait l'objet d'un lavage au moyen d'un tensioactif et/ou d'un solvant organique, préférentiellement l'acétone ou un alcool.

**Patentansprüche**

1. Verwendung einer porösen Beschichtung mit einer nicht mit einer hydrophoben reaktiven Verbindung, die mindestens eine hydrophobe Gruppe trägt, nachbehandelten Polysiloxanmatrix als schmutzabweisende Beschichtung, **dadurch gekennzeichnet, dass** die poröse Beschichtung:

- keine photokatalytischen Eigenschaften aufweist;
- einen Porositätsgrad im Bereich von 25 bis 70 Vol.-% aufweist und

- ein solches Volumen aufweist, dass der potentielle Füllgrad des Volumens der porösen Beschichtung mit Ölsäure mindestens 25 Vol.-% beträgt.

2. Verwendung nach Anspruch 1, **dadurch gekennzeichnet, dass** es sich bei der porösen Beschichtung um eine mesoporöse Beschichtung, deren Mesoporen eine Größe im Bereich von 2 bis 50 nm aufweisen, handelt.

3. Verwendung nach Anspruch 1 oder 2, **dadurch gekennzeichnet, dass** es sich bei der Polysiloxanmatrix um eine aus einer Zusammensetzung, die einen Vorläufer mit mindestens einem an 4 hydrolysierbare Gruppen oder Hydroxylgruppen gebundenen Siliciumatom umfasst, erhaltene Matrix handelt.

4. Verwendung nach Anspruch 3, **dadurch gekennzeichnet, dass** die Polysiloxanmatrix aus mindestens einem anorganischen Vorläufermittel der Formel:

$$Si(X)_4 \qquad (I)$$

wobei die Gruppen X gleich oder verschieden sind und für hydrolysierbare Gruppen stehen, die vorzugsweise aus Alkoxygruppen -O-R, Acyloxygruppen -O-C(O)R, wobei R für eine Alkylgruppe, vorzugsweise eine $C_1$-$C_6$-Alkylgruppe, steht, den Halogenen Cl, Br und I und Kombinationen dieser Gruppen ausgewählt sind; oder einem Hydrolysat dieses Vorläufermittels hergestellt ist.

5. Verwendung nach einem der vorhergehenden Ansprüche, **dadurch gekennzeichnet, dass** die Polysiloxanmatrix aus einem Sol, das kein hydrophobes Vorläufermittel, das mindestens eine hydrophobe Gruppe trägt, enthält, hergestellt worden ist.

6. Verwendung nach einem der Ansprüche 1 bis 4, **dadurch gekennzeichnet, dass** die Polysiloxanmatrix hydrophoben Charakter besitzt.

7. Verwendung nach Anspruch 6, **dadurch gekennzeichnet, dass** die Polysiloxanmatrix aus einem Sol, das ein hydrophobes Vorläufermittel, das mindestens eine hydrophobe Gruppe trägt, enthält, hergestellt worden ist.

8. Verwendung nach einem der vorhergehenden Ansprüche, **dadurch gekennzeichnet, dass** die poröse Beschichtung auf mindestens einem Teil der Hauptoberfläche eines Substrats aus organischem oder mineralischem Glas abgeschieden ist.

9. Verwendung nach Anspruch 8, **dadurch gekennzeichnet, dass** das Substrat mit einem Stapel von einer oder mehreren Schichten beschichtet ist, wobei die poröse Beschichtung die äußere Schicht bildet.

10. Verwendung nach einem der Ansprüche 8 oder 9, **dadurch gekennzeichnet, dass** es sich bei dem Substrat um ein Substrat für eine optische Linse oder einen Rohling für eine optische Linse, vorzugsweise für eine ophthalmische Linse oder einen Rohling für eine ophthalmische Linse, handelt.

11. Verwendung nach einem der vorhergehenden Ansprüche, **dadurch gekennzeichnet, dass** die poröse Beschichtung eine Dicke im Bereich von 50 nm bis 5 $\mu$m, vorzugsweise 50 bis 500 nm, aufweist.

12. Verwendung nach einem der vorhergehenden Ansprüche, **dadurch gekennzeichnet, dass** der potentielle Füllgrad des Volumens der porösen Beschichtung mit Ölsäure mindestens 30 Vol.-%, vorzugsweise mindestens 40%, noch besser mindestens 45%, beträgt.

13. Verwendung nach einem der vorhergehenden Ansprüche, **dadurch gekennzeichnet, dass** es sich bei der schmutzabweisenden Beschichtung um eine selbstreinigende Beschichtung handelt.

14. Verwendung nach einem der vorhergehenden Ansprüche, **dadurch gekennzeichnet, dass** die poröse Beschichtung gegen Sebum verwendet wird.

15. Verwendung nach einem der vorhergehenden Ansprüche, **dadurch gekennzeichnet, dass** die verwendete poröse Beschichtung zuvor mindestens eine Schmutzabscheidung empfangen hat und dann mit einem Tensid und/oder einem organischen Lösungsmittel, vorzugsweise Aceton oder einem Alkohol, gewaschen worden ist.

## Claims

1. Use as an antisoiling coating of a porous coating comprising a polysiloxane matrix that has not been post-treated with a hydrophobic reactive compound carrying at least one hydrophobic group, **characterized in that** the porous coating:

   - has no photocatalytic properties;
   - has a pore content ranging from 25 to 70% by volume; and
   - has a volume such that the potential fill factor of said porous coating volume by oleic acid is at least 25% by volume.

2. Use according to claim 1, **characterized in that** the porous coating is a mesoporous coating, which mesopores have a size ranging from 2 to 50 nm.

3. Use according to claim 1 or 2, **characterized in that** the polysiloxane matrix is a matrix obtained from a composition comprising a precursor containing at least one silicon atom bound to 4 hydrolyzable or hydroxyl groups.

4. Use according to claim 3, **characterized in that** said polysiloxane matrix was prepared from at least one inorganic precursor agent of formula:

$$Si(X)_4 \qquad (I)$$

wherein the X groups, being the same or different, represent hydrolyzable groups preferably selected from -O-R alkoxy, -O-C(O)R acyloxy groups, wherein R is an alkyl group preferably a $C_1$-$C_6$ alkyl group, halogens Cl, Br and I, and combinations of these groups; or from a hydrolyzate of this precursor agent.

5. Use according to any preceding claim, **characterized in that** the polysiloxane matrix has been prepared from a sol not containing any hydrophobic precursor agent carrying at least one hydrophobic group.

6. Use according to any of claims 1 to 4, **characterized in that** the polysiloxane matrix has a hydrophobic character.

7. Use according to claim 6, **characterized in that** the polysiloxane matrix has been prepared from a sol comprising a hydrophobic precursor agent carrying at least one hydrophobic group.

8. Use according to any preceding claim, **characterized in that** the porous coating is deposited onto at least part of the main surface of a substrate made of organic or inorganic glass.

9. Use according to claim 8, **characterized in that** the substrate is coated with a stack made of one or more layer(s), said porous coating of which forms the outer layer.

10. Use according to any of claims 8 or 9, **characterized in that** the substrate is an optical lens substrate or an optical lens blank substrate, preferably an ophthalmic lens substrate or an ophthalmic lens blank substrate.

11. Use according to any preceding claim, **characterized in that** the porous coating has a thickness ranging from 50 nm to 5 $\mu$m, preferably from 50 to 500 nm.

12. Use according to any preceding claim, **characterized in that** the potential fill factor of said porous coating volume by oleic acid is at least 30% by volume, preferably at least 40%, even more preferably at least 45%.

13. Use according to any preceding claim, **characterized in that** the antisoiling coating is a self-cleaning coating.

14. Use according to any preceding claim, **characterized in that** the porous coating is used against sebum.

15. Use according to any preceding claim, **characterized in that** the porous coating used received beforehand at least one soil deposition and was washed thereafter with a surfactant and/or an organic solvent, preferably acetone or an alcohol.

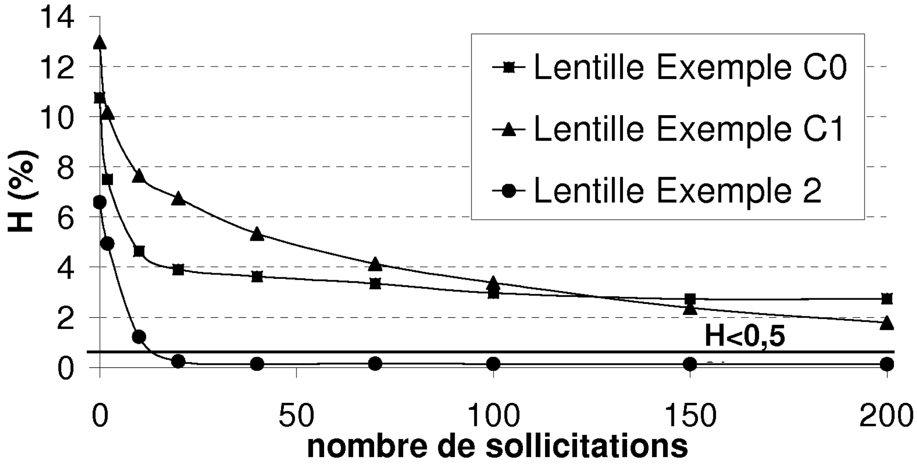


Figure 1

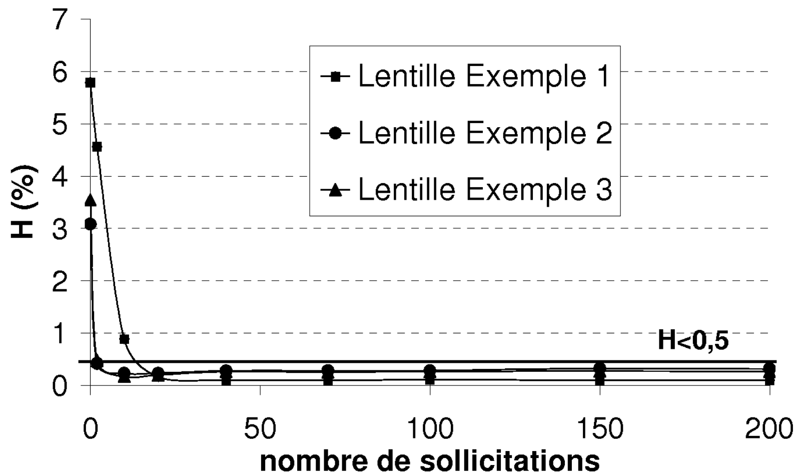


Figure 2

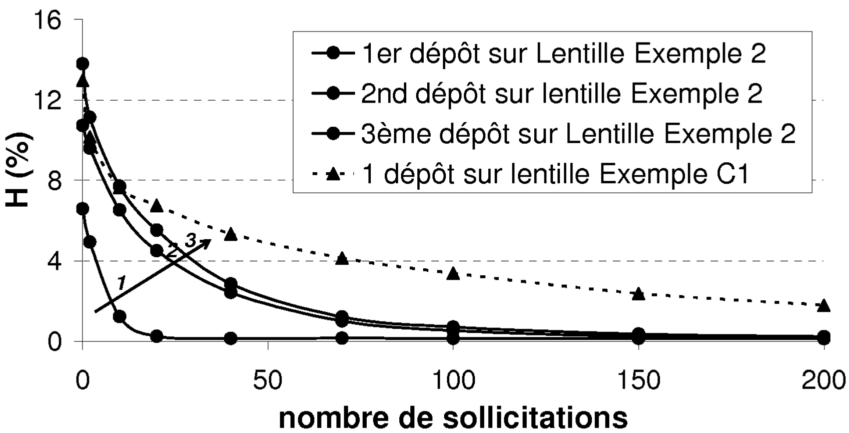


Figure 3

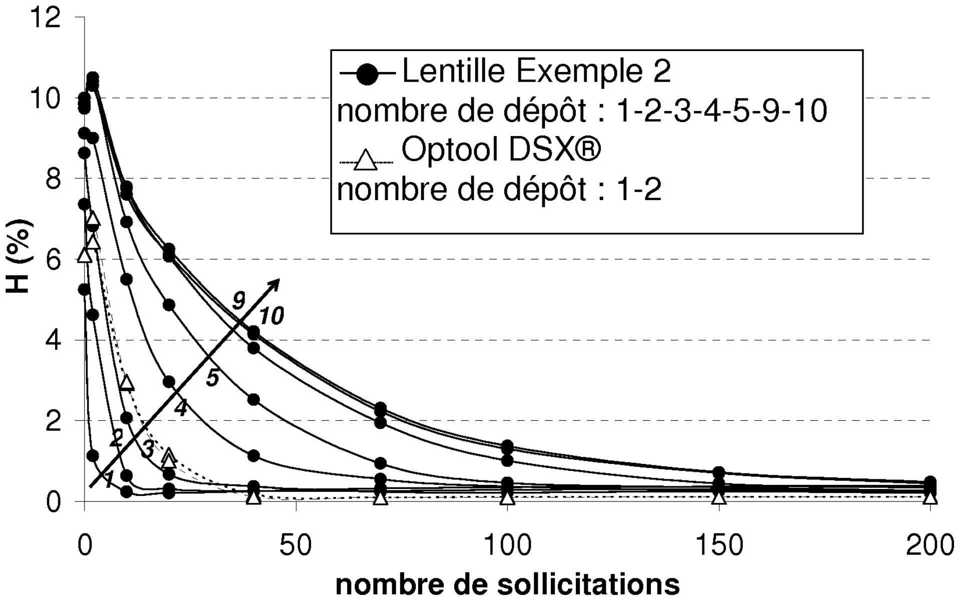


Figure 4

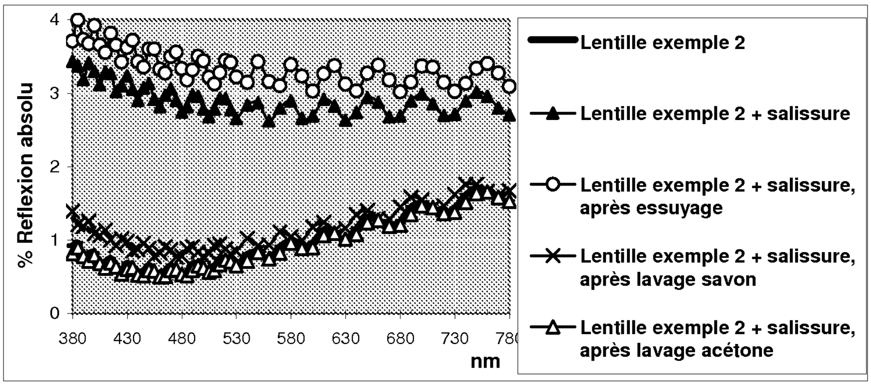


Figure 5

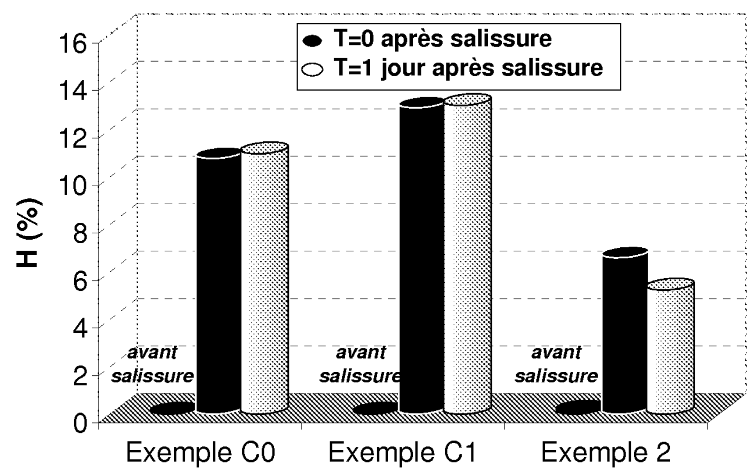


Figure 6

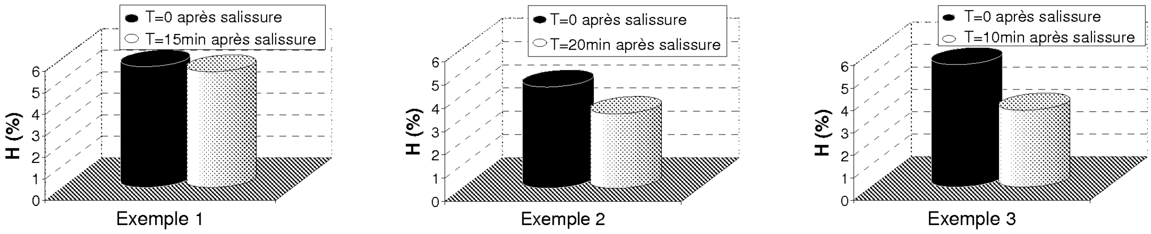


**Figure 7**

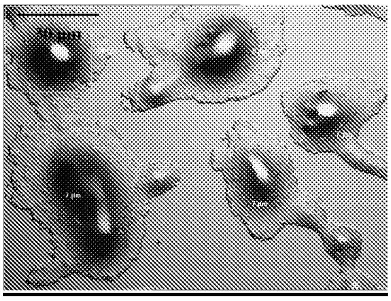


**Exemple C0 (t=0)**

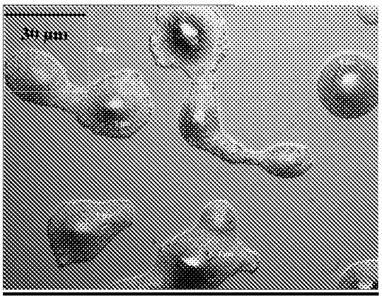


**Exemple C1 (t=0)**

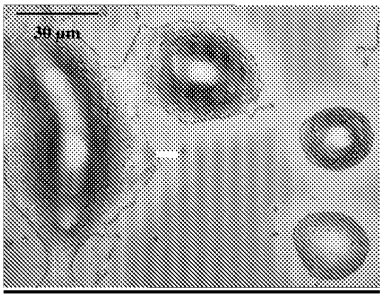


**Exemple 2 (t=0)**

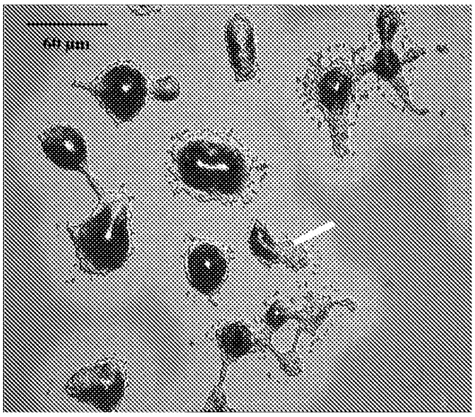


**Exemple 2 (t=15 minutes)**

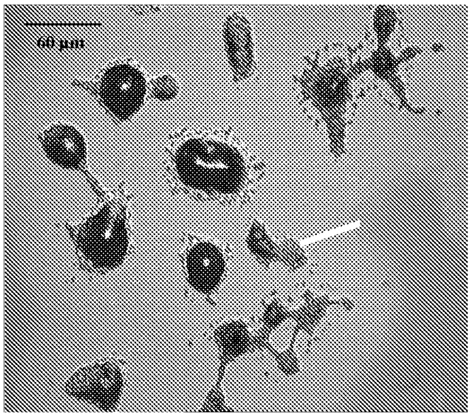


**Exemple 2 (t=1h30)**

**Figure 8**

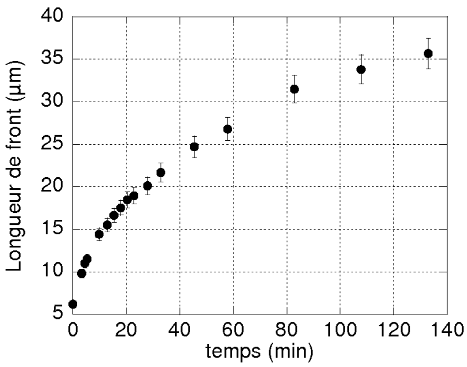


**Exemple 2**

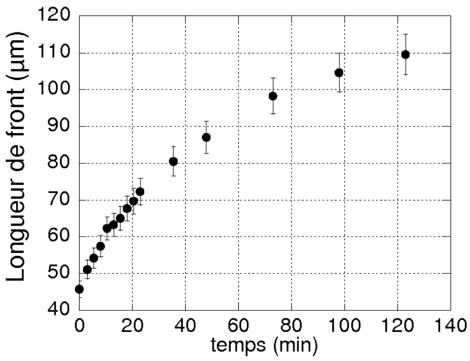


**Exemple 3**

Figure 9

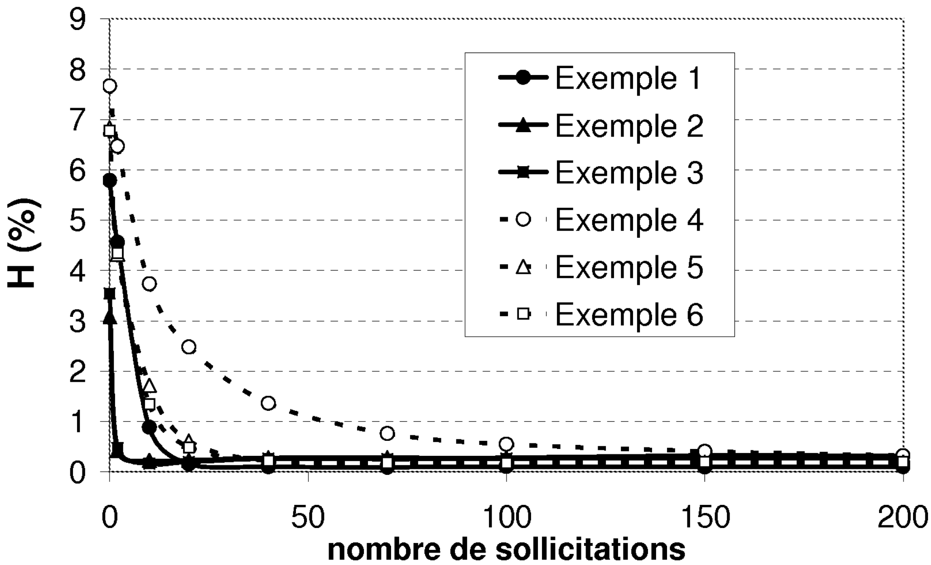


Figure 10

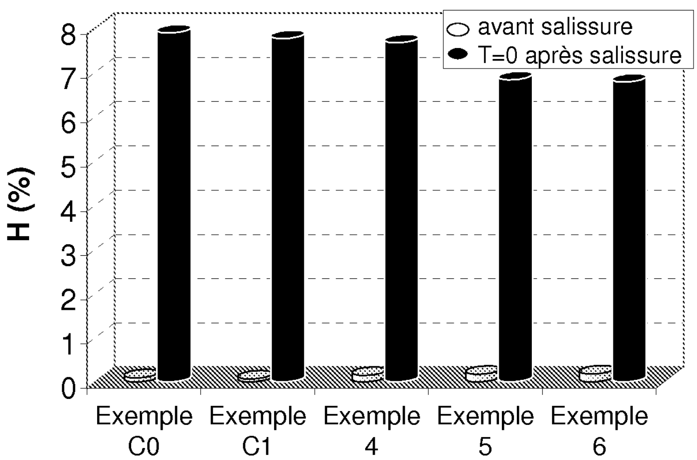


Figure 11

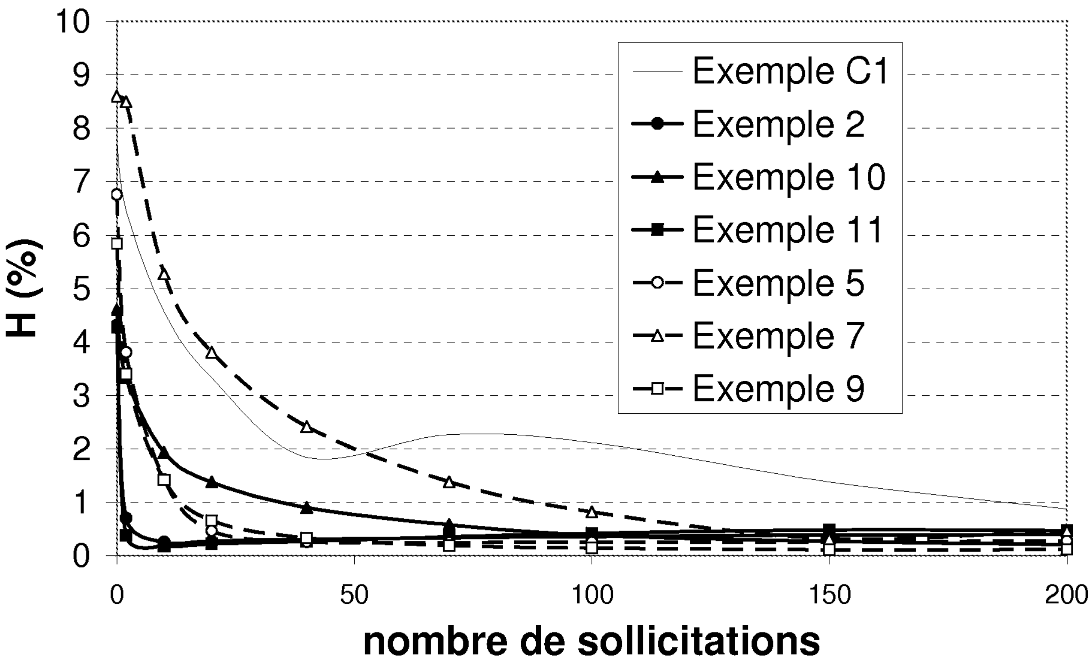


Figure12

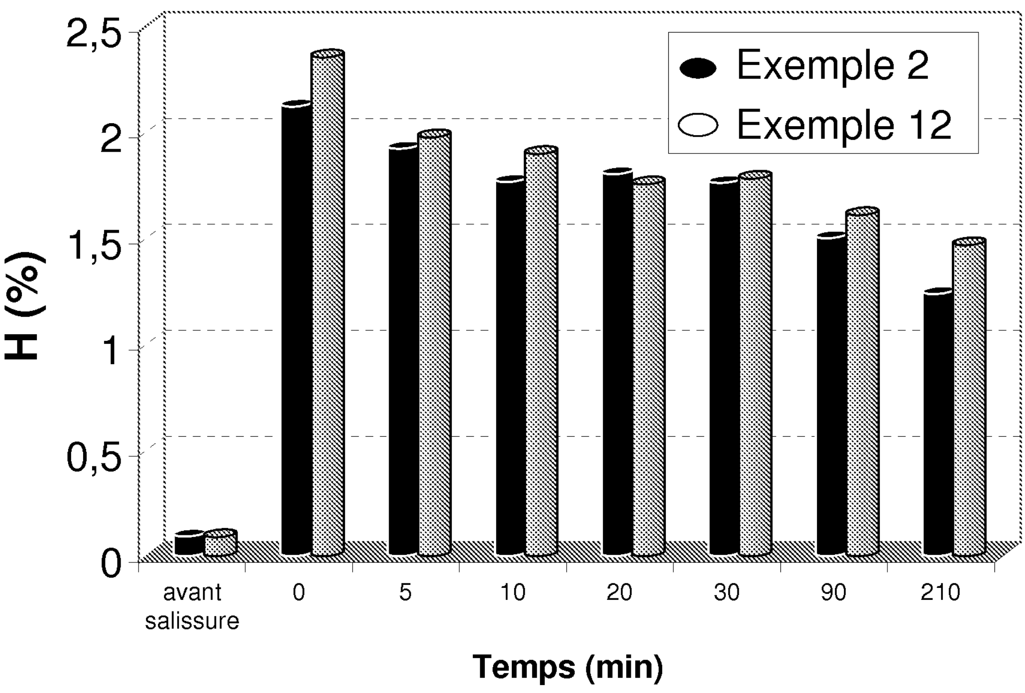


Figure 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6277485 B
- US 6183872 B
- EP 452723 A
- EP 492545 A
- EP 1300433 A
- JP 2005187936 A
- WO 2003087002 A
- WO 9710185 A
- WO 9710186 A
- WO 9944954 A
- WO 0166271 A
- FR 2787350
- WO 2006021698 A
- WO 2007088312 A
- US 20040151651 A
- JP 2000226572 A
- WO 2007090983 A
- US 2003157311 A
- WO 9909383 A
- FR 2734827
- FR 2702486
- US 4211823 A
- US 5015523 A
- EP 0614957 A


### Littérature non-brevet citée dans la description


- l'IUPAC Compendium of Chemistry Terminology. 1997
- *Science,* 1983, vol. 220, 365371
- *The Journal of Chemical Society, Faraday Transactions,* 1985, vol. 81, 545-548
- **A. BRUNET-BRUNEAU ; S. FISSON ; G. VUYE ; J. RIVORY.** *J. Appl. Phys.,* 2000, vol. 87, 7303-7309
- **A. BRUNET-BRUNEAU ; S. FISSON ; B. GALLAS ; G. VUYE ; J. RIVORY.** *Thin Solid Films,* 2000, 377-378, 57-61
- **M. R. BAKLANOV ; K. P. MOGILNIKOV ; V. G. POLOVINKIN ; F. N. DULTSEV.** *J. Vac. Sci. Technol. B,* 2000, vol. 18, 1385-1391
- **F. ROUQUEROL ; J. ROUQUEROL ; K. SING.** Adsorption by powders and porous solids. Principles, methodology and applications. Academic Press, 1999